# EUROPEAN PATENT APPLICATION

(11) **EP 1 760 821 A1**
(43) Date of publication of application: **07.03.2007**
(21) Application number: 05751353.3
(22) Date of filing: 14.06.2005
(51) Int. Cl.: H01M 10/54, C22B 3/44, H01M 6/52

(54) **METHOD OF DISPOSING OF LITHIUM BATTERY**

(30) Priority: 21.06.2004 JP 2004182938
(71) Applicant: TOYOTA JIDOSHA KABUSHIKI KAISHA, Toyota-shi, Aichi-ken 471-8571 (JP)
(72) Inventor: UCHIDA, Yoshimasa, c/o TOYOTA JIDOSHA K.K., Toyota-shi, Aichi 4718571 (JP); HIRATA, Yoshimi, c/o TOYOTA JIDOSHA K.K., Toyota-shi, Aichi 4718571 (JP); ARIMURA, Kazutaka, c/o TOYOTA JIDOSHA K.K., Toyota-shi, Aichi 4718571 (JP); YAMASAKI, Hiroshi, c/o TOYOTA JIDOSHA K.K., Toyota-shi, Aichi 4718571 (JP)
(74) Representative: Kuhnen & Wacker
(86) International application number: PCT/JP2005/011209
(87) International publication number: WO 2005/124921

(57) **Abstract**

A method of recovering valuable materials from lithium batteries wherein a lithium/transition metal composite oxide is used as a positive electrode active material. In this disposal method, a sheeted positive electrode having a positive electrode active material disposed on a positive electrode collector is immersed in an oxalic acid solution. By virtue of this oxalic acid treatment (step 240), any lithium element contained in the positive electrode active material can be leached into the oxalic acid solution. Using oxygen gas produced by a reaction between the positive electrode active material and oxalic acid, attachments, such as the positive electrode active material, can be self-detached from the positive electrode collector. The transition metal element contained in the positive electrode active material is converted by the oxalic acid treatment to insoluble transition metal compounds (oxalate, oxide, etc.). Thus, though simple means such as filtration (step 244), the leached lithium element can be easily separated from the insoluble transition metal element.

## Description

The application claims priority to Japanese Patent Application No. 2004-182938 filed on June 21, 2004, the entire contents of which are incorporated herein by reference.

### TECHNICAL FIELD

The present invention relates to a technology for recovering valuable material from lithium batteries. In particular, the present invention relates to a technology in which useful recovered material is obtained from a lithium composite oxide that is used as a positive electrode active material.

### BACKGROUND ART

A variety of methods related to recovering valuable materials from discarded lithium batteries have been proposed. In many of such conventional technologies, a strong acid acts on the constituent materials of a battery that includes a positive electrode active material to leach the transition metal elements and the like that are included in the constituent materials of this battery into the acid. Then each element is separated and recovered by applying various treatments to the solution into which the transition metal elements and the like have dissolved. For example, Japanese Patent Application Publication No. JP-A-2002-198103 discloses a recovery method for the constituent metals of an electrode that includes, for example, a step in which a metal solvent solution is prepared by dissolving the positive electrode active material for a battery and the like using an acid (hydrochloric acid, nitric acid, aqua regia or the like) and a step in which the metal elements (cobalt, nickel, and the like) are separated and recovered after applying an oxidation treatment to the metal solvent solution. Other examples of related art include Japanese Patent Application Publication No. JP-A-H11-185834 and Japanese Patent Application Publication No. JP-A-H11-6020.

However, the conventional methods can be significantly improved in terms of, for example, the usefulness (purity, properties, and the like) of the recovered valuable materials and recovery costs. In particular, it would be advantageous to be able to recover the lithium element and/or the transition metal elements from the composite oxide that includes the lithium and transition metal elements that are used as positive electrode active material and the like in a lithium battery in a form that is more easily reusable and/or in a manner that is more efficient.

Thus, the present invention is a treatment method for a lithium battery that is provided with a composite oxide that includes lithium and one or more species of a transition metal element, and one object of the present invention is to provide a treatment method (valuable material recovery method) that enables recovery of valuable materials from the lithium battery in a form that is more readily reusable. Another object of the present invention is to provide a treatment method that recovers such valuable materials more efficiently. Yet another object is to provide materials for a lithium battery that have been obtained by using the valuable materials that have been recovered in this manner and a manufacturing method for the same. Another object is to provide a lithium battery that uses these materials and a manufacturing method for the same.

### DISCLOSURE OF THE INVENTION

The inventors have discovered that by causing oxalic acid to act on a composite oxide that includes lithium and transition metal elements, the lithium element that forms the composite oxide can be suitably separated and extracted from the transition metal elements. Thereby, the problems described above can be solved, and the present invention completed.

One invention provided by this application relates to a treatment method for a lithium battery (typically, a lithium ion secondary battery) that is provided with a positive electrode active material that is substantially formed by a composite oxide that includes lithium and one or more species of transition metal element (below, referred to as a "lithium/transition metal composite oxide", or simply, a "composite oxide"). This method includes an oxalic acid treatment step that supplies an oxalic acid solution to a treated material that is derived from the lithium battery and that includes the positive electrode active material. Due to this oxalic acid treatment step, it is possible to leach the lithium element from the positive electrode active material that is included in the treated material. This treatment method may further include a separation step in which the lithium solution that includes the leached lithium element is separated from the insoluble portion of the treated material.

In such a treatment method, it is possible to generate lithium oxalate from the lithium that forms the composite oxide due to the oxalic acid treatment step in which oxalic acid (H₂C₂O₄) acts on the lithium/transition metal composite oxide that is included in the treated material. This lithium oxalate is soluble in an oxalic acid solution and water. In contrast, most of the lithium/transition metal composite oxide prior to the oxalic acid treatment and the transition metal compounds (the oxalates, oxides, and the like of the transition metal elements that form the composite oxide described above) produced by this treatment are substantially insoluble in an oxalic acid solution and water, or clearly have a low degree of solubility (for example, their solubility with respect to water or an oxalic acid solution or the like) at least in comparison to lithium oxalate. Therefore, by means of, for example, leaching the generated lithium oxalate by an oxalic acid solution and/or water, it is possible to separate and extract the lithium oxalate (lithium element) and the insoluble portion of the treated material (the transition metal element included in this insoluble portion). For example, by immersing the treated material described above in an oxalic acid solution, lithium oxalate is generated from the composite oxide included in the treated material, and it is possible to leach the lithium oxalate into the oxalic acid solution. In addition, by a method such as extracting (raising) the insoluble portion of the treated material from the oxalic acid solution and filtering the oxalic acid solution, the insoluble portion that includes the transition metal element and the liquid phase (lithium solution) that includes the lithium element can be readily separated.

Typically, the oxalic acid treatment described above can be implemented by using an oxalic acid solution wherein the oxalic acid element (oxalic acid or an ion thereof) is dissolved in a solvent. As a solvent that forms this oxalic acid solution, an aqueous solvent (here, meaning water or a solvent mixture that includes water and an organic solvent that can be uniformly mixed with water) is preferable. A particularly preferable solvent is water. This type of oxalic acid solution can be prepared, for example, by dissolving oxalic acid or an oxalate (preferably oxalic acid) in the solvents described above. In addition, a solution that includes oxalic acid that has been recovered by a step described below can be preferably used as the oxalic acid solution used in the oxalic acid treatment step described above.

A composite oxide that includes lithium and nickel is an advantageous example of the composite oxide described above. Here, a "composite oxide that includes lithium and nickel" has a meaning that encompasses, in addition to oxides in which lithium and nickel are the constituent metal elements, composite oxides that include lithium and nickel and at least one species of metal element other than elements mentioned above (specifically, a transition metal element and/or a common metal element other than lithium and nickel). Such a composite oxide can be represented, for example, by the general formula LiNi₁₋ₓAₓO₂. In this formula, A corresponds to "at least one species of metal element", and for example, one or more metal elements selected from the group consisting of Co, Al, Mn, Cr, Fe, V, Mg, Ti, Zr, Nb, Mo, W, Cu, Zn, Ga, In, Sn, La, and Ce are suitable. In addition, in this formula, x is a value satisfying the relationship 0 ≤ x < 0.5, and more preferably, 0.1 < x < 0.3. Other advantageous examples of the composite oxide described above include a composite oxide that includes lithium and cobalt (encompassing one that includes lithium and at least one species of metal element other than cobalt) and a composite oxide that includes lithium and manganese (encompassing one that includes lithium and at least one species of metal element other than manganese).

In one preferable form of the treatment method disclosed herein, the treated material supplied to the oxalic acid treatment step described above includes a positive electrode having a positive electrode active material on a positive electrode collector. By supplying oxalic acid to a positive electrode having such a structure (preferably by immersing the positive electrode into an oxalic acid solution), it is possible to cause a portion or all of the positive electrode active material to fall off (self-detach) from the positive electrode collector naturally. By utilizing this phenomenon, it is possible to separate the positive electrode collector that forms the positive electrode described above from the positive electrode active material efficiently. Such an effect is thought to be realized in connection with the oxygen gas that is generated due to the reaction between the positive electrode active material and the oxalic acid.

The positive electrode collector that forms a common lithium battery (in particular, the lithium ion secondary battery) is frequently made of aluminum (here and below, denoting that the primary constituent material is aluminum or an alloy having aluminum as the main element). The present invention enables a preferable implementation in a form in which such a positive electrode that has a positive electrode active material on a positive electrode collector made of aluminum serves as the treated material. In comparison, for example, to a strong acid such as hydrochloric acid, the oxalic acid solution acts weakly when dissolving the metal material (for example, an aluminum material) that is generally used as the positive electrode collector in a lithium battery. Therefore, by adjusting the treatment conditions and the like, it is possible to carry out control such that the positive electrode collector is not excessively dissolved during the oxalic acid treatment. Thereby, it is possible to improve the recovery rate of the material (for example, aluminum material) that forms the positive electrode collector. The temperature of the oxalic acid solution used in the oxalic acid treatment can be set, for example, from about 25 to 80°C. This condition is suitable for balancing at high precision the treatment efficiency and the recovery rate of the material that forms the positive electrode collector in the oxalic acid treatment.

The treatment method of the present invention is preferably applied to a lithium battery that is provided with a wound type electrode. Such a wound type electrode typically includes a sheeted positive electrode that has the positive electrode active material described above on a positive electrode collector, and a sheeted negative electrode. Preferably, the treated material that includes a positive electrode sheet (having the positive electrode active material described above on a positive electrode collector) originating in a lithium battery having such a structure is supplied to the oxalic acid treatment step described above. Preferably, this positive electrode sheet is supplied to the oxalic acid treatment step after being separated from the negative electrode sheet that forms the wound type electrode described above. Thereby, sheeted positive electrode collector that forms the positive electrode (typically, an elongated metal foil) can be separated and recovered from the positive electrode active material with high efficiency.

In one preferable form of the treatment method disclosed herein, the oxalic acid treatment step described above includes a treatment in which a positive electrode having a positive electrode active material on a positive electrode collector is immersed in an oxalic acid solution. Thereby, the positive electrode collector that forms the positive electrode can be separated and recovered from the positive electrode active material and the like with high efficiency. In the case in which the positive electrode is, for example, an elongated sheet (strip shape), by passing each part of the positive electrode sheet in the longitudinal direction through the oxalic acid solution in sequence (preferably continuously), it is possible to treat the elongated positive electrode sheet with high efficiency.

The treatment method of the present invention may also include a step in which, after separating the oxalic acid element from the lithium solution obtained by the separation step described above, the lithium element included in the lithium solution after the separation thereof is precipitated as lithium carbonate (Li₂CO₃). Preferably, the lithium carbonate is precipitated by supplying carbon dioxide gas (CO₂) and/or a carbonic acid (H₂CO₃) to this lithium solution. In addition, it is possible to include a treatment in which this precipitated lithium carbonate is separated from this solution. Thereby, it is possible to recover the lithium element (lithium ions) included in this lithium solution as a solid lithium compound (lithium carbonate). The lithium element recovered in this manner as a solid can be conveniently reused. In addition, by precipitating lithium carbonate by using a material (carbon dioxide gas or the like) that does not include any alkali metal element as described above, it is possible to obtain lithium carbonate that has mixed therein few alkali metallic elements other than lithium. For example, when compared to the case in which sodium carbonate is used instead of carbon dioxide gas or a carbonic acid, the amount of the sodium element that is mixed into the obtained lithium carbonate can be made remarkably small. Once the sodium element has become mixed into the lithium element, it is generally difficult to separate the sodium element from the lithium element. Thus, according to the form described above, by a simple operation it is possible to obtain lithium carbonate having a high purity (in particular, the mixed amount of alkali metal elements and transition metal elements and the like other than lithium is small). In this manner, the high purity lithium carbonate has a superior reusability for a variety of uses. For example, the lithium carbonate is advantageous as a material for lithium batteries (raw material for the manufacture of positive electrode active material or the like).

In addition, another preferable form of the treatment method disclosed herein is further provided with a step in which oxalic acid is recovered by separating the lithium element from the lithium solution obtained by the separation step described above. Here, the recovered oxalic acid can be reused in the oxalic acid treatment step described above. According to such a form, it is possible to circulate and use the oxalic acid with high efficiency. Thereby, for example, effects are obtained in that the treatment cost is reduced and the environmental load is reduced.

A preferable embodiment of the oxalic acid recovery step described above includes a treatment in which calcium oxalate is precipitated by supplying the calcium hydroxide to the lithium solution obtained by the separation step described above. In addition, it is possible to include a treatment in which the precipitated calcium oxalate is separated from the solution. Additionally, it is possible to include a treatment in which nitric acid is supplied to the separated calcium oxalate to generate calcium nitrate. Furthermore, it is possible to include a treatment in which oxalic acid is recovered by separating the generated calcium nitrate and the liquid phase that includes the oxalic acid element. According to such a form, it is possible to reuse the oxalic acid with high efficiency. The preferred embodiment of the oxalic acid recovery step described above may further include a step in which lithium carbonate is precipitated by supplying carbon dioxide gas (CO₂) to a solution obtained by the treatment described above in which the precipitated calcium oxalate is separated. In addition, it is possible to include a treatment in which this precipitated lithium carbonate is separated from this solution. According to such a form, the oxalic acid can be reused with high efficiency, and at the same time, it is possible to recover the lithium element included in the lithium solution described above as a high quality solid lithium compound (Li₂CO₃).

Preferably, the treated material that is included in the positive electrode active material is supplied to the oxalic acid treatment step after the constituent materials of the battery other than the positive electrode collector have been removed (separated). Thereby, it is possible to obtain valuable materials (recycled materials) having a greater reusability. For example, a (high quality) lithium carbonate in which the amounts of transition metal elements and other alkali metal elements are small (different species of metal elements) can be obtained. Alternatively, more useful transition metal compounds (transition metal hydroxides) can be obtained. Furthermore, the treated material that has had the positive electrode collector removed may be supplied to the oxalic acid treatment step. The separation of the treated material that is supplied to the oxalic acid treatment step may be carried out, taking into account the cost and labor incurred by such separation, and the size of the effect produced thereby (the reusability (quality) of the recovered valuable materials and the like), such that these are suitably balanced.

For example, many common lithium batteries are provided with a positive electrode having a structure in which a positive electrode material that includes a positive electrode active material is attached to an aluminum foil, which acts as a positive electrode collector. In addition to the positive electrode active material, this positive electrode material may also typically incorporate an adhesive (binder) such as polyvinylidene- fluoride, polytetrafluoroethylene, or the like. Furthermore, a conductive material such as carbon black or the like may be incorporated. A positive electrode having a positive electrode material that includes these attached to the positive electrode collector can be used as-is (supplied to the oxalic acid treatment step) as a treated material. In addition, it is possible to use as the treated material a positive electrode from which at least a portion (preferably substantially all) of the adhesive included in the positive electrode has been removed by, for example, a heat treatment described below. A lithium battery may be provided with an electrode body (wound type electrode body, laminated electrode body, or the like) having a structure in which a negative electrode and the above-described positive electrode are laminated. In this electrode body, the negative electrode, which includes a negative active material, is attached to the surface of a sheeted negative electrode collector (for example, copper foil). This electrode body that includes both such a positive electrode and a negative electrode can be used as a treated material. In addition, the positive electrode sheet that has been separated from the negative electrode sheet may be supplied to the oxalic acid treatment as a treated material.

In contrast, an electrolytic solution is an example of a constituent material of a battery that is preferably separated from the treated material in advance. Generally, an electrolytic solution has a composition in which an electrolyte (supporting salt) is dissolved in an organic solvent. Preferably, the treated material should be separated in advance from at least one of the organic solvent and the electrolyte that form the electrolytic solution, and more preferably, should be separated from both the organic solvent and the electrolyte in advance. Thereby, at least one of the following effects is obtained: it is possible to reuse the constituent materials (the organic solvent and the like) of the electrolyte effectively, and the handling characteristics of the treated material are improved. This separation of the electrolytic solution and the treated material can be efficiently carried out by removing the electrolytic solution (the organic solvent and the electrolyte) by heating the lithium battery. A portion or all of the battery constituent materials that remain after the heat treatment may be supplied to the oxalic acid treatment step as a treated material. In addition, an example of another method in which the electrolytic solution and the treated material are separated is a method in which the electrolytic solution is removed by extracting the lithium battery by using a nonaqueous organic solvent or the like.

In a preferable form of the present invention, a treatment is carried out in which the volatile materials are removed by heating the lithium battery that is the object of treatment. Here, "volatile material" denotes a material that can be removed after becoming a gas (any type of evaporation, sublimation, thermal decomposition or the like) due to heating. Examples of such a volatile material include one or more species of the organic solvents that form the electrolytic solution, electrolytes (lithium salts and the like) that form the electrolytic solution, separators, adhesives, insulating materials, external coatings and the like. Although preferably substantially all of each of the constituent materials is removed, the effects of the present invention can be exhibited even when at least a portion thereof is removed. Preferably, a majority of the electrolyte and organic matter (organic solvents, separators, adhesives, and the like) included in the lithium battery are removed, and more preferably, substantially all are removed.

It is possible to supply a portion or all of the battery constituent members that remain after this heating (for example, after removing the electrolyte and the organic matter by heating the lithium battery) to the oxalic acid treatment step as a treated material. In the case in which the present invention is applied to a lithium battery provided with a wound type electrode that includes a sheeted positive electrode having a positive electrode active material on a positive electrode collector, the materials remaining after the electrode body has been separated from the other battery constituent materials (for example, the battery container) can be preferably used as the treated material. This separation can be easily implemented, for example, by an operation such as removing the electrode body after cutting the battery container. Furthermore, the sheeted (typically elongated) positive electrode that has been separated from the negative electrode by unwinding (disassembling) the wound state of this electrode body can be preferably used as the treated material.

Preferably, the step in which the volatile material (the electrolyte and the organic matter) is removed by heating the lithium battery is carried out at reduced pressure. In this case, by utilizing the lower boiling point due to the reduced pressure, it is possible to volatilize the volatile material (organic solvent and the like) at a lower temperature than when carried out at normal pressure. Thereby, for example, it is possible to suppress the degradation (thermal decomposition and the like) of the organic solvent included in the electrolytic solution and to obtain a recycled material having a favorable reusability. In addition, because it is possible to increase the volatilization rate due to the reduced pressure, the effects can be obtained that the time taken during the heating becomes short and a recycled material having less degradation (better reusability) is obtained. In addition, by carrying out heating under reduced pressure in this manner, it is possible to restrain the oxidation of the metal members that form the lithium battery. This is advantageous in terms of recovering and reusing the metal members.

The step in which the volatile materials described above are removed may be carried out under substantially constant conditions or may be carried out such that the treatment conditions (at least one among the treatment conditions such as the heating temperature, the degree of the reduced pressure or the like) are changed gradually and/or stepwise during the treatment. Normally, preferably this step is implemented in a sequence in which the heating temperature is raised stepwise. Thereby, it is possible to recover valuable materials having a greater reusability.

Note that preferably the lithium battery that is the object of this treatment has been substantially completely discharged in advance. Thereby, at least one of the following effects is obtained: improvement in the handling characteristics and workability during the treatment, improvement in the working environment, downsizing of the treatment apparatus, simplification, and the like.

In a typical form of this treatment method, in the oxalic acid treatment step described above, the lithium element is leached from the positive electrode active material described above, and at the same time, insoluble compounds (for example, the oxalates and oxides of transition metals and the like) are generated. In these insoluble compounds, one or more species of transition metal elements serve as the constituent elements. The lithium oxalate (lithium element) and the transition metal elements can be readily separated by utilizing the difference in solubility of such insoluble transition metal compounds and lithium oxalate.

The treatment method disclosed herein may further incorporate an acid leaching step in which at least one species of transition metal element among the one or more species of transition metal elements included in the insoluble portion of the treated material described above is leached into a strong acid. As the acids used in this step, one or more acids may be selected from, for example, sulfuric acid, hydrochloric acid, nitric acid, aqua regia or the like. In addition, it is possible to incorporate a step in which a neutralizing agent is added to the solution obtained by the acid leaching step described above and the hydroxides of the transition metal elements included in the solution are precipitated. Preferably, this transition metal hydroxide precipitation step is implemented in a form in which the solution obtained in the acid leaching step described above is separated (for example, filtered) from the insoluble portion of the treated material, and the neutralizing agent is added to this separated solution.

According to such a treatment method, it is possible to recover the transition metal element included in the positive electrode active material in the form of a transition metal hydroxide having a good reusability. The transition metal hydroxides that have been recovered in this manner can be advantageously used, for example, as the raw material (transition metal raw material) for manufacturing the positive electrode active material for a lithium battery.

The positive electrode active material that is treated by using the method disclosed herein can be one that includes lithium, a first transition metal element, and at least one other species of metal element (below, sometimes referred to as "the other metal element"). Ni, Co, and Mn are advantageous examples of the first transition metal element described above. In addition, the other metal element described above is a metal element that differs from the first transition metal element, and may be one or more metal elements selected from the group consisting of Ni, Co, Al, Mn, Cr, Fe, V, Mg, Ti, Zr, Nb, Mo, W, Cu, Zn, Ga, In, Sn, La, and Ce. In such a case, a step is carried out in which the first transition metal element and at least one species of the other metal element included in the insoluble portion of the treated material described above are leached by a strong acid. After this step, a neutralizing agent is added to the solution (preferably the solution that has been separated from the insoluble portion of the treated material) obtained from this acid leaching step, and a hydroxide of the first transition metal element and a hydroxide of the at least one species of the other metal element are precipitated from this solution.

At this time, the ratio (mole ratio, mass ratio, and the like) of the content of the first transition metal element described above and the other metal element described above in the solution obtained by the acid leaching step described above is determined, and in the case in which this ratio deviates from a prescribed range, it is possible to adjust and return the ratio to the prescribed range. For example, when the first transition metal element described above is nickel, the other element described above may be one or more of the species selected from Co, Al, Mg, Cr and the like. The ratio of the content of these metal elements is determined (for example, by using composition analysis or the like), and the ratios are adjusted so as to return to a ratio within the prescribed range by a procedure such as adding elements whose amounts are less than the prescribed amounts. Subsequently, the hydroxide of the first transition metal element described above and the hydroxide of the other metal element described above may be precipitated (preferably, coprecipitated) from this solution. In particular, when the first transition metal element described above is nickel and the other metal element described above is cobalt, by coprecipitating a nickel hydroxide and a cobalt hydroxide, a recovered material in which the nickel and cobalt are composited can be obtained. This recovered composited nickel and cobalt material can be used as a raw material for the positive electrode active material. In addition, generally the cobalt hydroxide precipitated from the solution readily forms a colloid, and thus by coprecipitating the cobalt hydroxide with the nickel hydroxide, they can be readily separated from the liquid phase.

As a neutralizing agent, aqueous ammonia, alkali metal hydroxides (for example, sodium hydroxide) and the like can be used. A preferable example of a neutralizing agent is aqueous ammonia. Aqueous ammonia may be used alone, or may be used in combination with other neutralizing agents (alkali metal hydroxides and the like). In the case in which aqueous ammonia is used as the neutralizing agent, preferably the step in which the transition metal hydroxide described above is precipitated is carried out while controlling at least one item among the concentration of the transition metal ions (in a solution incorporating a first transition metal element and the other metal element, the concentration of the ions of the first transition metal element (the first transition metal ions)), the solution pH, and the concentration of the ammonium ions (NH₄⁺) so as to remain within a prescribed range. In the precipitation step described above, preferably at least two or more among these items are controlled so as to remain in a prescribed range, and controlling all three items so as to remain within a prescribed range is particularly preferable. Thereby, a precipitate (mainly a transition metal hydroxide) is obtained for which at least one characteristic value among the mean particle diameter, the specific surface area, or the full width at half maximum of the X-ray diffraction peak is in a desired range. Preferably, two or more among these values are in the prescribed range, and particularly preferably, all three characteristic values are in the desired range. Such a precipitate is advantageously used as a raw material for manufacturing the lithium/transition metal composite oxide used as the positive electrode active material of the lithium battery. When the lithium/transition metal composite oxide obtained from such a precipitate is provided as the positive electrode active material, it is possible to obtain a lithium battery having superior charging characteristics and discharging characteristics. In addition, when a lithium/transition metal composite oxide using this precipitate is manufactured, a product having advantageous storage characteristics is obtained. Note that the mean particle diameter described above can be measured by a particle diameter measuring apparatus or the like that uses, for example, a laser diffraction or scattering method. The specific surface area can be measured by using a specific surface area measuring apparatus or the like that uses, for example, a BET method. The full width at half maximum described above can be obtained from X-ray diffraction intensity curves obtained by using, for example, a common powder X-ray diffraction apparatus.

Alternatively, the hydroxide of the first transition metal element described above and the hydroxide of the other metal element described above may be precipitated by adding a neutralizing agent (for example, an alkali metal hydroxide such as NaOH) to the acid solution obtained by the acid leaching step described above, and treating this precipitate further. Thereby, a transition metal hydroxide material that is more favorable as a manufacturing raw material for a positive electrode active material or the like can be prepared. The treatment described above can be carried out, for example, as follows. Specifically, the ratio (mole ratio, mass ratio, and the like) of the contents of the first transition metal element described above and the other metal element described above that are included in this precipitate (the mixture of the hydroxide of the first transition metal element and the hydroxide of the other metal element) is determined. In the case that this ratio has deviated from the prescribed range, an equivalent necessary amount of the insufficient metal element is added to the mixture (typically as the hydroxide of the metal element). The acid solution is prepared by dissolving in an acid (for example, nitric acid) the mixture having a composition that has been prepared in this manner. At this time, the concentration may be adjusted such that the total concentration of the transition metal element included in the acid solution is, for example, 0.5 to 2.5 mol/liter. This acid solution is neutralized by using a neutralizing agent such as ammonia to precipitate both the hydroxide of the transition metal element described above and the hydroxide of the other metal element described above from this solution. Preferably, the treatment is carried out while adjusting the precipitation conditions at this time such that at least one item among the concentration of the ions of the first transition metal element (first transition metal ions), the solution pH, or the concentration of the ammonium ions (NH₄⁺) are within the prescribed range described above. In this manner, it is possible to obtain a precipitate (the raw material for the transition metal hydroxide) having an advantageous composition and/or properties as a raw material for manufacturing the lithium/transition metal composite oxide to be used as the positive electrode active material for a lithium battery.

The present invention is particularly preferably applied to a lithium battery that is provided with a positive electrode active material substantially formed from a composite oxide (specifically, a lithium-nickel composite oxide) in which the (first) transition metal of the lithium/transition metal composite oxide is mainly nickel. A lithium-nickel composite oxide in which the first transition metal element is nickel and cobalt is included as the other metal element (accessory element) is an advantageous example of such a composite oxide. In a lithium battery that is provided with such a positive electrode active material, the advantages that result from using the treatment method of the present invention can be exhibited particularly clearly.

According to any of the lithium battery treatment methods described above, it is possible to attain a recovery rate of 85 mass% or more (in a more advantageous form, 90 mass% or more) of the lithium element included in the positive electrode active material of the lithium battery that is the object of treatment as a converted element content of lithium. At such a recovery rate, it is possible to recover solid lithium compounds (typically, lithium carbonate). In addition, it is possible to attain a recovery rate of 90 mass% or more of at least one species among the transition metal elements included in the positive electrode active material (preferably, at least the transition metal element, which is the main part of the lithium/transition metal composite oxide) as a converted element content of transition metal. In a more preferable form, it is possible to attain a recovery rate of 95 mass% or more as a converted element content of transition metal. At such a recovery rate, the transition metal element is recovered as a hydroxide. Another aspect of the invention disclosed herein is a method in which valuable materials such as the solid lithium compounds from lithium batteries (for example, lithium carbonate), transition metal compounds (for example, transition metal hydroxides such as nickel hydroxide, cobalt hydroxide or the like) and the like are manufactured from lithium batteries with high efficiency using as a starting material lithium batteries (typically, a lithium ion secondary battery) that are provided with a positive electrode active material substantially formed from a composite oxide that includes lithium and one or more species of a transition metal element. Such valuable materials are useful as raw materials or the like for manufacturing the positive electrode active material for lithium batteries.

A copper (Cu) element that originates in the positive electrode active material and/or the other battery constituent materials may be included in the treated material described above. For example, in a lithium battery that is provided with a negative electrode collector made of copper, the copper element originating in this negative electrode collector is included in the treated material. In the case in which the treated material incorporates a copper element, both the other transition metal element (for example, a transition metal element such as nickel, cobalt, or the like) that forms the positive electrode material and the copper element are included in the insoluble portion of the treated material that has been separated from the lithium solution in the separation treatment described above. In the case in which a copper element is included in the insoluble portion of the treated material in this manner, the present invention may be implemented in a form further provided with a copper element removal step that removes this copper element by leaching by an acid. Thereby, it is possible to recover from this insoluble element a valuable material (for example, a transition metal hydroxide such as nickel hydroxide, cobalt hydroxide and the like) having a higher purity at a high efficiency. When the treatment method of the present invention is applied to a lithium battery that is provided with a negative electrode collector made of copper and that has been substantially completely discharged in advance as described above, the effect due to implementing such a copper element removal step is particularly clearly exhibited.

The specific treatment that is carried out by this copper element removal step is not particularly limited. Preferably, in terms of increasing the recovery rate of the transition metal elements other than copper, this step is carried out such that the copper element is dissolved and the transition metal elements other than copper (for example, Ni, Co and the like) are as far as possible not dissolved. In one preferable form, this copper element removal step includes a treatment in which the copper element is leached from the insoluble portion of the treated material described above by using a hydrochloric acid solution having a temperature of 60°C or more (typically, 60 to 100°C) and a concentration of 0.1 to 0.5 mol/liter. Thereby, both the removal efficiency of the copper element from the insoluble portion and the recovery rate of the other transition metal elements can be compatibly increased to a high level.

Another invention disclosed herein relates to a positive electrode active material for a lithium battery (typically, a lithium ion secondary battery). In this positive electrode active material, lithium hydroxide and a transition metal hydroxide are mixed at a prescribed proportion, and the lithium/transition metal composite oxide that is generated by baking this mixture serves as the main constituent. Here, the lithium hydroxide (for example, the lithium hydroxide monohydrate (LiOH·H₂O)) obtained by baking the lithium carbonate recovered from the lithium battery by any of the treatment methods described above and reacting this baked product with water can be used as the lithium hydroxide. According to this treatment method, it is possible to obtain a high purity lithium carbonate. In particular, a mixture can be obtained in which the amount of alkali transition metals (sodium and the like) other than lithium is small. Therefore, the lithium hydroxide obtained (prepared) from such a lithium carbonate can be advantageously used as a raw material for the positive electrode active material of a lithium battery. In addition, the transition metal hydroxides recovered from a lithium battery by any of the methods described above can be advantageously used as a transition metal hydroxide.

Another invention disclosed herein relates to a method (manufacturing method for a positive electrode active material for a lithium battery) in which the positive electrode active material for a lithium battery is manufactured by using lithium batteries that use a positive electrode active material having a lithium/transition metal composite oxide as a main constituent as a starting material. This method incorporates a step in which a transition metal raw material and a lithium hydroxide raw material for manufacturing a positive electrode active material are manufactured and a step in which these raw materials are mixed and baked in a prescribed proportion. Here, the lithium metal hydroxide obtained through the following steps can be used as a lithium hydroxide raw material:
a step in which lithium oxalate is generated by acting oxalic acid solution on the positive electrode active material included in the treated material that originates in the lithium battery that serves as the starting material;
a step in which this lithium oxalate is leached into an oxalic acid solution or water and separated from the insoluble portion of the treated material;
a step in which calcium oxalate is precipitated from the solution by adding calcium hydroxide to the obtained lithium solution;
a step in which the precipitated calcium oxalate is separated from the solution;
a step in which the lithium carbonate is precipitated from the solution by supplying carbon dioxide gas and/or carbonated water to the solution after separation;
a step in which the precipitated lithium carbonate is separated from the solution; and
a step in which separated lithium carbonate is baked and then reacted with water. In addition, a transition metal hydroxide obtained through the following steps can be preferably used as the transition metal raw material:
a step in which the transition metal element in the insoluble portion described above is leached into acid (typically, a strong acid); and
a step in which the hydroxide of the transition metal element is precipitated by adding a neutralizing agent to this solution.

According to such a manufacturing method, the lithium element and the transition metal element (mainly included in the positive electrode active material) used in a lithium battery that serves as a starting material are each recovered, and by mixing and baking them, it is possible to regenerate a positive electrode active material (wherein the composition may be substantially identical to or may be different from the positive electrode active material of the lithium battery that serves as the starting material) for a lithium battery.

Note that in the baking step described above, preferably the mixture of the transition metal raw material and the lithium hydroxide raw material are heated stepwise. The obtained positive electrode active material (the lithium/transition metal composite oxide) for a lithium battery can advantageously be reused as a constituent material for a lithium battery after implementing a treatment in which the particle diameters are adjusted as necessary, a treatment in which absorbed water is removed, and the like.

The invention disclosed herein includes a lithium battery constructed by using the positive electrode active material for the lithium battery described above. A typical example of such a lithium battery is one that is provided with a positive electrode in which a positive electrode material that includes a positive electrode active material is provided on a positive electrode collector; a negative electrode in which a negative electrode material that includes a negative electrode active material is provided on a negative electrode collector; and an electrolyte is provided between this positive electrode material and negative electrode material, and here, the lithium battery is constructed by using (reusing) the positive electrode active material described above as the positive electrode active material included in the positive electrode material.

Such a lithium battery can be advantageously manufactured, for example, by the following method. Specifically, a transition metal raw material (typically, a transition metal hydroxide) and lithium hydroxide are mixed in a prescribed composition ratio. A lithium/transition metal composite oxide is produced by baking this mixture. A positive electrode is fabricated by adhering this composite oxide to a collector. A lithium battery is constructed by accommodating the positive electrode in the battery casing along with the electrolyte solution and the negative electrode which is interposed by the electrolyte solution from the positive electrode.. Preferably, a lithium hydroxide that is generated by baking the lithium carbonate recovered from the lithium battery by any of the treatment methods described above and then reacting the same with water can be preferably used as the lithium hydroxide used in the raw material of the composite oxide described above. In addition, the transition metal hydroxide that has been recovered from a lithium battery by any of the treatment methods described above can be preferably used as the transition metal raw material.

### BRIEF DESCRIPTION OF THE DRAWINGS

FIG. 1 is a flowchart showing an outline of the sequence in which valuable materials are recovered from a lithium ion secondary battery.
FIG. 2 is a flowchart showing an outline of the sequence in which the volatile element is recovered from the lithium battery.
FIG. 3 is a cross-sectional view schematically showing the structure of a lithium ion secondary battery.
FIG. 4 is an explanatory drawing showing the enlarged collector of a lithium ion secondary battery.
FIG. 5 is a schematic drawing showing an example of a simplified configuration of an apparatus that is used in the recovery of the volatile element.
FIG. 6 is an explanatory drawing showing the fluctuation of the furnace temperature.
FIG. 7 is a schematic drawing shown an example of a simplified configuration of the apparatus that is used in the oxalic acid treatment.
FIG. 8 is a flowchart showing an outline of the sequence in which valuable materials are recovered from the insoluble portion after the oxalic acid treatment.
FIG. 9 is a graph showing the relationship between the concentration of the hydrochloric acid and the amount of the dissolved transition metal element.
FIG. 10 is a graph showing the relationship between the temperature of the hydrochloric acid solution and the amount of the dissolved transition metal element.

### BEST MODES FOR CARRYING OUT THE INVENTION

Below, although specific embodiments related to the present invention are explained, the present invention is not intended to be limited by what is shown in the embodiments. In addition, in the present description, matters that are technical matters outside the content discussed and necessary for implementing the present invention can be understood to be matters of design for a person skilled in the art based on conventional technology. The present invention can be implemented based on the technical content disclosed in the present description and technical knowledge of the relevant fields.

### First embodiment: treatment method for a lithium ion secondary battery

First, the structure of a lithium battery (here, a spent lithium ion secondary battery for automotive use) that is treated by this embodiment will be explained.

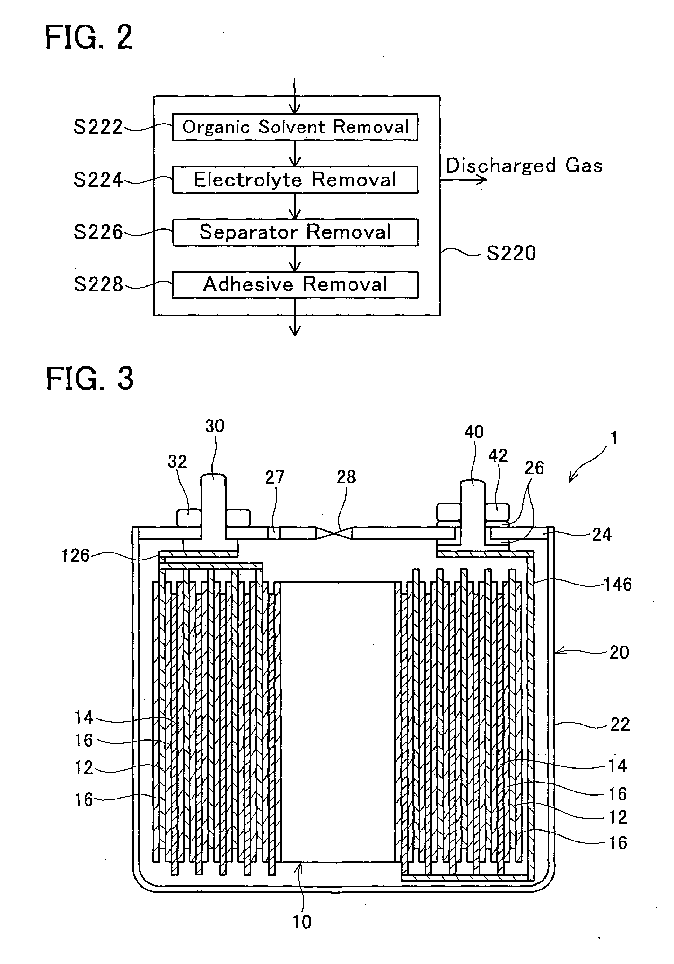

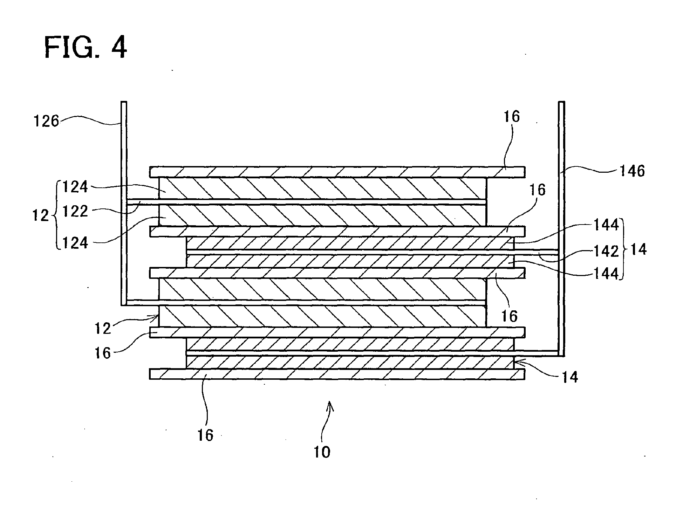

FIG. 3 is a schematic cross-sectional view showing a lithium ion secondary battery according to the present embodiment, and FIG. 4 is an explanatory drawing showing a portion thereof that has been enlarged. As shown in these drawings, a secondary battery 1 is provided with a wound type electrode 10 in which a pair of electrode sheets (positive electrode sheet 12 and negative electrode sheet 14) are wound so as to have a flat profile with two separator sheets 16 interposed therebetween; a battery container 20 having a flat parallelepiped shape (also referred to as cornered or flat) that accommodates the electrode body 10, and a positive terminal 30 and a negative terminal 40 that are each connected to the end portions of the electrode body 10 in the axial direction.

As shown in FIG. 4, the positive electrode sheet 12 that forms the electrode body 10 is provided with an elongated positive electrode collector 122 and positive electrode material layers 124 that are provided by adhering the positive electrode material to both sides of the positive electrode collector 122 in a layered arrangement. In addition, the negative electrode sheet 14 is provided with an elongated negative electrode collector 142 and negative electrode material layers 144 that are provided by adhering the negative electrode material to both sides of the negative electrode collector 142 in a layered arrangement. The electrode body 10 has a structure in which these sheets are laminated in sequence: positive electrode sheet 12, separator sheet 16, negative electrode sheet 14, and separator sheet 16. This laminated body is wound in the length direction (longitudinal direction). The laminated positive electrode sheet 12 and negative electrode sheet 14 are insulated by the separator 16. As shown in FIG. 3 and FIG. 4, at one end of this wound type electrode 10 in the axial direction, the positive electrode collector 122 is bound and connected (for example, soldered) to the positive electrode collector plate 126 and further connected to the positive electrode terminal 30. In addition, at the other end of the wound type electrode 10 in the axial direction, the negative electrode collector 142 is bound and connected (for example, soldered) to the negative electrode collector plate 146 and further connected to the negative electrode terminal 40. Note that in the lithium ion secondary battery 1 according to the present embodiment, the length of a positive electrode sheet 12 that forms one electrode body 10 is approximately eight meters.

The principal element of the positive electrode material layer 124 of this secondary battery 1 is a positive electrode active material substantially formed by a lithium-nickel composite oxide in which the first transition metal element is nickel and the other metal element is cobalt. Such a positive electrode active material can be represented by the general formula LiNi₁₋ₓCoₓO₂ (where 0 < x < 0.5, and preferably 0.1 < x < 0.3). In a secondary battery 1 according to the present embodiment, a lithium-nickel composite oxide in which x in this general formula is approximately 0.2 (specifically, the composite oxide represented by LiNi_{0.8}Co_{0.2}O₂) is used as the positive electrode active material. The positive electrode material layer 124 further includes carbon black (CB) and polytetrafluoroethylene (PTFE). The incorporated proportions of the same are a proportion in which, for example, the mass ratio of the positive electrode active material:CB:PTFE is about 85:10:5. In contrast, in the negative electrode material layer (the graphite layer) 144, the main constituent is carbon black (CB), which serves as the negative electrode active material, and polytetrafluoroethylene (PTFE) is incorporated as an adhesive. The incorporated proportion of the same is a proportion in which, for example, the mass ratio of CB:PTFE is 90:10.

In the positive electrode collector 122, the positive electrode collector plate 126 and the positive electrode terminal 30 that form the secondary battery 1 are made of aluminum. The positive electrode collector 122 is made of an aluminum foil having a thickness of approximately 5 to 20 µm. The negative electrode collector 142, the negative electrode collector plate 146, and negative electrode terminal 40 are made of copper. The negative electrode collector 142 is made from a copper foil having a thickness of approximately 5 to 20 µm. In addition, the separator sheet 16 is a porous sheet made of a polyolefin (here, polypropylene).

The battery container 20 is made of aluminum, and is provided with a body (battery casing) 22 that is cylindrical and has a bottom, and a lid body (battery lid) 24 that seals the upper end opening of the body 22. The wound type electrode 10 is accommodated inside this container 20. The positive electrode terminal 30 and the negative electrode terminal 40 pass through the lid body 24 and extend outside of the container 20. These terminals 30, 40 are fastened to the lid body 24 by screws 32, 42. The negative electrode terminal 40 and the lid body 24 are separated by an insulating body 26. The lid body 24 has an injection opening 27 that is used, for example, to inject an electrolyte. This injection opening 27 is sealed during the normal use of the secondary battery 1. In addition, the lid body 24 is provided with a safety valve 28. This safety valve 28 is structured so as to release pressure by automatically connecting the inside of the container 20 to the outside when the internal pressure of the container 20 increases and exceeds a prescribed setting value.

The electrode body 10 is immersed in an electrolyte solution (not illustrated). One or more species may be selected from the group consisting of γ-butyrolactone, ethylene carbonate, propylene carbonate, dimethyl carbonate, diethyl carbonate, ethylmethyl carbonate, 1,2-dimethoxyethane, 1,2-diethoxyethane, tetrahydrofuran, 1,3-dioxolane, and the like to be used as an organic solvent that forms the electrolyte solution. In the secondary battery 1 according to the present embodiment, a 7:3 (mass ratio) solvent mixture of dimethyl carbonate (DMC) and ethylmethyl carbonate (EMC) is used. In addition, one or more species selected from any type of lithium salt in which fluorine serves as a constituent element may be used as an electrolyte (supporting salt) that forms the electrolyte solution. For example, the electrolyte may be one or more species selected from the group consisting of LiPF₆, LiBF₄, LiAsF₆, LiCF₃SO₃, LiC₄F₉SO₃, LiN(CF₃SO₂)₂, LiC(CF₃SO₂)₃ or the like. In the secondary battery 1 according to the present embodiment, lithium hexafluorophosphate (LiPF₆) is used as the electrolyte. The concentration thereof is about 1 mol/liter.

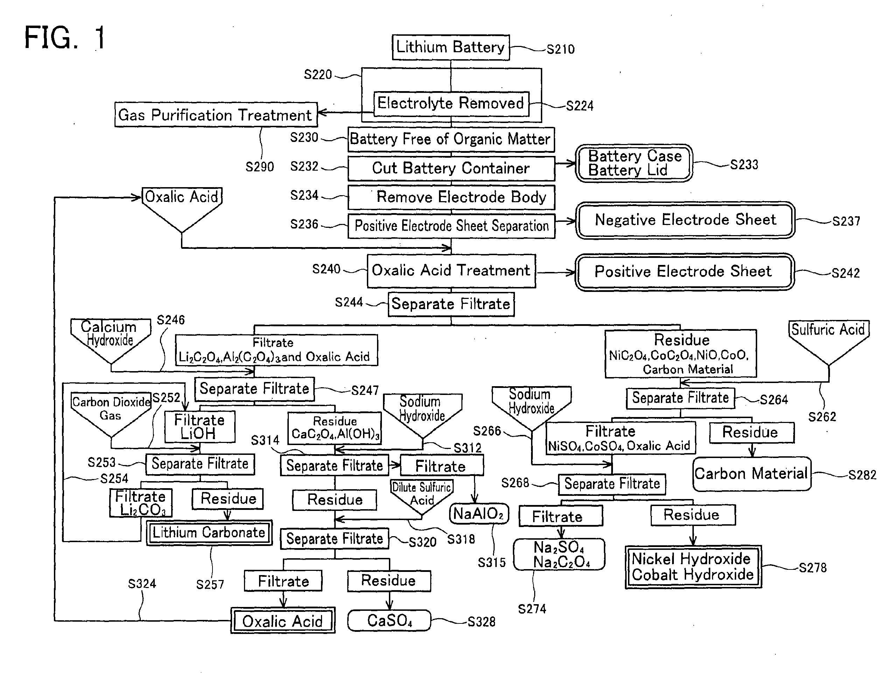

Next, the sequence in which the lithium ion secondary battery 1 having the structure described above is treated will be explained. FIG. 1 is a flowchart showing an outline of this sequence.

First, the spent lithium ion secondary battery 1 is prepared (step 210), and a vacuum heating process is carried out in which the lithium ion secondary battery 1 is heated under reduced pressure and the volatile elements such as the electrolyte and the organic matter is recovered (step 220). As shown in FIG. 1 and FIG. 2, this step 220 includes a step 222 in which the organic solvent is removed (recovered), a step 224 in which the electrolyte is removed (recovered), a step 226 in which the separator is removed (recovered), and a step 228 in which the binder is removed (recovered). In FIG. 1, a portion of the steps included in step 220 described above have been omitted.

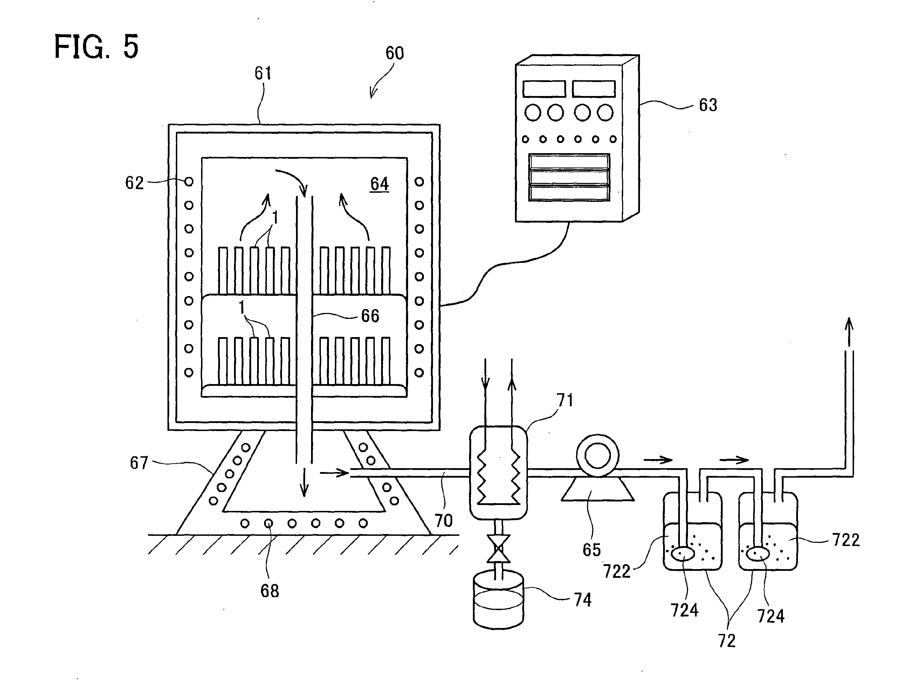

FIG. 5 schematically shows an example of a simplified structure of an apparatus (a vacuum heating treatment apparatus) that is used in the recovery of such volatile elements. In FIG. 5, a reduced pressure heating furnace 60 is provided with a body 61 that defmes a treatment chamber 64. An induction heating coil 62 is provided on the wall surface of the body 61. The temperature in the treatment chamber 64 can be controlled in an arbitrary pattern by a temperature controller 63 that is connected to the coil 62. A vacuum pump 65 is connected to the body 61, and the internal pressure of the treatment chamber 64 can be arbitrarily controlled.

A primary cooling apparatus 67 is provided under the treatment chamber 64. The gas (for example, an organic solvent that has been volatilized from the lithium ion secondary battery) in the treatment chamber 64 is introduced into the primary cooling apparatus 67 via a gas duct 66 in the furnace. An induction heating coil 68 is provided on the wall surface of the primary cooling apparatus 67, and the degree of the cooling can be adjusted in this primary cooling apparatus 67. Downstream of this primary cooling apparatus 67, a secondary cooling apparatus 71 is connected via a gas duct 70 outside the furnace. The recovered material that has been cooled and condensed (liquefied or solidified) by this secondary cooling apparatus 71 is gathered in the collector 74. The remaining gas is discharged outside via the discharged gas depurator 72.

Using an apparatus having such a structure, the organic solvents are volatilized and removed from the secondary battery 1, for example, as follows, and these volatilized materials are recovered (step 222). Specifically, the spent lithium ion secondary battery 1 that has been opened in advance is accommodated in the treatment chamber 64. The method of opening the secondary battery 1 may be appropriately selected from a method in which a through-hole is opened in the container 20, a method in which the seal of the injection opening 27 is opened, a method in which the safety valve 28 is activated, or the like. A vacuum pump 65 is operated to reduce the pressure inside the treatment chamber 64. The pressure level is not limited in particular. Normally, preferably the pressure is reduced to at least 100 kPa or less (typically, 0.1 to 100 kPa, and preferably 1 to 80 kPa). In the present embodiment, the pressure in the treatment chamber 64 is reduced to about 50 kPa.

The temperature inside the treatment chamber 64 (temperature in the furnace) is raised by passing electricity through the induction heating coil 62 while maintaining this state of decreased pressure. Thereby, the secondary battery 1 is heated. The heating temperature at this time can be brought into the neighborhood of the boiling point of the organic solvent of the electrolyte solution (in the case in which two or more organic solvents are included, the boiling point of each of the elements or their common boiling point) used in the secondary battery 1 depending on the pressure in the treatment chamber 64. Alternatively, the secondary battery 1 may be heated to a temperature that exceeds the boiling point of the organic solvents within a range in which the only constituent material of the battery that is substantially volatilized is the organic solvent. Thereby, it is possible to volatilize the organic solvent from the secondary battery 1 with high efficiency. Note that at normal pressure the boiling point of DMC is 90°C and the boiling point of EMC is 107°C.

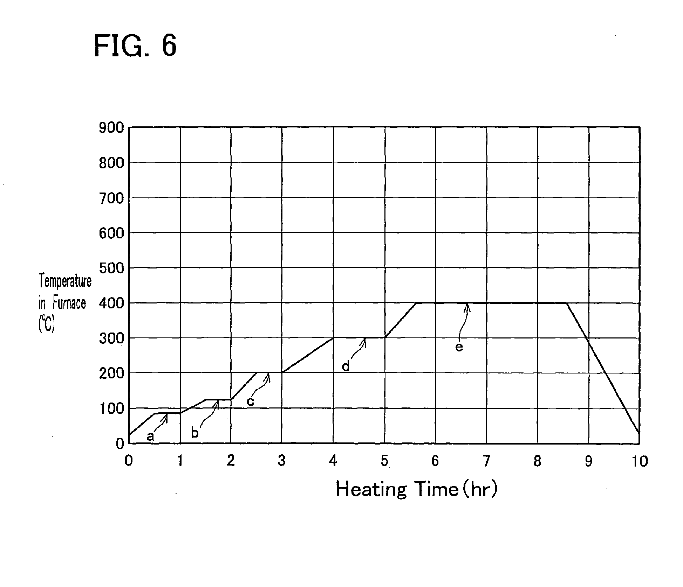

In the present embodiment, as illustrated in the temperature chart shown in FIG. 6, the temperature in the furnace is raised gradually from room temperature, and a temperature of about 85°C is maintained for 30 minutes (the stage shown by the arrow "a" in the figure). Thereby, among the organic solvents, DMC is preferentially volatilized (gasified). The generated gas is introduced via the gas duct 66 in the furnace into the primary cooling apparatus 67 and the secondary cooling apparatus 71 via the gas duct 70, which is outside the furnace. The gas is cooled in this secondary cooling apparatus 71, and the organic material is then condensed (liquefied) and recovered in the collector 74. Next, the temperature in the furnace is raised further and maintained at 102°C for 30 minutes (the stage shown by the arrow "b" in the figure). Thereby, the remaining organic solvent (mainly EMC) is volatilized (gasified), and then liquefied and recovered in the secondary cooling apparatus 71.

In the present embodiment, in this manner, the organic solvent (solvent mixture) that includes two elements having different boiling points is volatilized by two-stage heating. Specifically, after volatilizing most of the DMC, which has a relatively low boiling point, in the stage "a" described above, the remaining organic solvent (mainly EMC) is volatilized by further raising the heating temperature. In this manner, by varying the heating temperature in stages to remove the solvents in sequence from the low boiling point solvents to the high boiling point solvents, it is possible to volatilize and to recover the organic solvents at high efficiency while suppressing the degradation (decomposition and the like) due to heating.

Note that the vapor pressure of DMC at 24°C is about 2.4 kPa, and the vapor pressure of EMC at 25°C is about 3.3 kPa. Thus, the DMC and EMC volatilized in stages "a" and "b" described above are typically recovered as a mixture of solvents. As will be described below, this recovered solvent mixture has a small proportion of contaminants (the thermal decomposition products of DMC and EMC and the like), and has a favorable reusability. For example, it is possible to use (reuse) this solvent mixture as the electrolyte solution for a lithium ion secondary battery.

Next, after the heating described above, the remaining constituent materials of the battery are further heated, the electrolyte (here, LiPF₆) is thermally decomposed, and the gas (decomposed gas) that includes this thermally decomposed material is removed (step 224). Specifically, as illustrated, for example, in the temperature chart shown in FIG. 6, the temperature in the furnace is maintained in a temperature range equal to or greater than the thermal decomposition temperature (about 160°C) of LiPF₆ (the stage shown by the arrow "c" in the figure). The heating temperature at this time can be set in a range of from about 160 to 200°C, and preferably in a range of from about 180 to 200°C (in the present embodiment, about 200°C). Thereby, the LiPF₆ is thermally decomposed, and mainly lithium fluoride (LiF) and phosphorus pentafluoride (PF₅) are generated. The decomposed gas (discharged gas) that includes phosphorus pentafluoride is further treated by a step (step 290) described below. Note that the heating temperature when carrying out this stage "c" is not limited to the temperatures described above, and may be a temperature range that enables volatilizing the electrolyte at a practical rate and removing it from the secondary battery 1. For example, this treatment can be carried out in a temperature range equal to or greater than the volatilization (thermal decomposition) temperature of the electrolyte. Preferably, this treatment is set to a range of from the volatilization (thermal decomposition) temperature to the volatilization temperature + 50°C. If the reduced pressure is about the same amount, preferably the heating temperature in the stage "c" is set to 80°C or more higher than the temperature of the stages "a" and "b" described above.

The separators are volatilized (mainly thermally decomposed) and removed from the constituent materials of the battery that remain after step 224 shown in FIG. 2, and these volatile materials are recovered (step 226). Specifically, as illustrated in the temperature chart shown in FIG. 6, the temperature in the furnace is maintained at about 300°C (the stage shown by the arrow "d" in the figure). Thereby, the separator 16 (the porous polypropylene sheet) that forms the electrode body 10 shown in FIG. 3 is thermally decomposed and a gas of low-grade hydrocarbons and the like is generated. This gas can be recovered as a liquid (a viscous liquid state whose main constituent is a mixture of a plurality of types of hydrocarbons) or a solid in the primary cooling apparatus 67 and/or the secondary cooling apparatus 71. The obtained recovered material can be reused effectively as a fuel or the like.

Furthermore, the adhesive that forms the electrode material is volatilized (mainly thermally decomposed) and removed from the constituent materials of the battery that remain after the heating described above, and these volatile materials are recovered (step 228). Specifically, as illustrated in the temperature chart shown in FIG. 6, the temperature in the furnace is maintained at about 400°C (the stage shown by the arrow "e" in the figure). Thereby, the adhesive (polytetrafluoroethylene) that forms the electrode material is thermally decomposed, and a gas of a low-grade hydrocarbon and fluoride and the like is generated. This generated gas can be recovered (captured) as a liquid or a solid at one or more locations among the primary cooling apparatus 67, the secondary cooling apparatus 71, and the discharged gas depurator 72.

Note that the heating temperature when carrying out stages "d" and "e" described above is not limited to the temperatures described above, and may be a temperature range in which the separator and the adhesive can be respectively volatilized (thermally decomposed and the like) at a practical rate and removed from the secondary battery 1. In terms of shortening the time required to remove the separator and the adhesive (organic material) and/or improving the removal rate of the adhesive, preferably the heating temperature while carrying out this stage "d" and/or stage "e" is set on the high side. However, preferably the temperature is set to a level that does not melt the metal members that form this battery (for example, in the case of aluminum, about 570°C or less, and preferably about 550°C or less). Normally, the highest heating temperature (here, stage "e") in this vacuum heating step (step 220) is suitably set in a range of from about 350 to 570°C (more preferably, from about 370 to 550°C).

In the above step (step 220), the volatile materials are recovered at each step by raising the heating temperature in stages. In this manner, by extracting from the secondary battery the constituent materials thereof in sequence starting from the materials having a low volatilizing temperature to materials having a high volatilization temperature, it is possible to obtain recovered materials (valuable materials) having a favorable reusability. Note that due to the increase in the internal resistance of the battery and the like, extracting (removing) the organic solvent first from the battery in this manner is preferable because the handling characteristics of the battery in the subsequent steps are improved. In addition, by carrying out the extraction of the organic solvents (step 222) under a reduced pressure, at least one of the following effects is obtained:
(1) preventing degradation of the organic solvent due to excessive heating;
(2) shortening the time required to remove the organic solvents; and
(3) conserving the energy used for heating.

Note that the electrolyte (the decomposed gas thereof) removed in step 224 described above can be recovered as a stable compound by the following step (phosphorus fluorides stabilization step) described below.

Specifically, the decomposed gas (discharged gas), which includes phosphorus pentafluoride generated due to the decomposition of the electrolyte, passes through the primary cooling apparatus 67 and the secondary cooling apparatus 71, and is then introduced into the discharged gas depurator 72 that is connected downstream of the vacuum pump 65, all of which are shown in FIG. 5. The treated liquid (here, the aqueous calcium hydroxide solution) 722 is stored inside this discharged gas depurator 72. When the discharged gas is bubbled into the treated liquid 722 from the discharged gas supply opening 724 provided in proximity to the bottom of the discharged gas depurator 72, the calcium hydroxide reacts with the phosphorus pentafluoride to generate calcium fluoride (CaF₂) and tricalcium phosphate (Ca₃(PO₄)₂). Thereby, it is possible to recover (capture) the fluorine element and the phosphorus element stably (step 290) as a solid.

Note that although FIG. 5 shows a configuration in which two discharged gas depurators 72 are in serial provided with the object of increasing the efficiency of the treatment of the electrolyte (the decomposed gas thereof), a single discharged gas depurator 72 may instead be provided. Alternatively, a configuration may be used in which two or more discharged gas depurators 72 are provided in serial or in parallel. In addition, when introducing the discharged gas into the treated liquid 722, in order to increase the reaction efficiency, preferably the contact area between the discharged gas and the treated liquid is made large by bubbling the gas in a fine bubble state.

After passing through the vacuum heating treatment step (step 220), a battery free of organic material, in which the electrolyte and organic matter have been removed, is obtained (step 230). This battery free of organic matter (the heated remainder of the constituent materials of the battery) includes the container 20 that includes the container body (battery case) and the lid body, the positive electrode sheet 12 that includes the positive electrode collector and the positive electrode active material, and the negative electrode sheet 14 that includes the negative electrode collector and the negative electrode active material. The positive electrode sheet 12 and the negative electrode sheet 14 form the wound type electrode 10. In step 232 shown in FIG. 1, the battery free of organic matter 230 is divided (step 232) by, for example, a method in which the lid body 24 of the container 20 is cut off (severed), and the wound type electrode 10 is removed (step 234). The container 20 (the battery case 22 and the lid body 24) that has been separated from the electrode body 10 is recovered (step 233) and can be reused in a variety of uses as an aluminum material.

In this manner, the wound type electrode 10, which has been separated from the other constituent materials of the battery, has been rendered into a state in which there are many gaps between the positive electrode sheet 12 and the negative electrode sheet 14 because the separator 16 has already been lost (volatilized). The positive electrode sheet 12 and the negative electrode sheet 14 (which have been unwound) are separated by releasing the wound state of this electrode body 10. The negative electrode collector is recovered from the separated negative electrode sheet 14 (step 237), and this can be reused as a copper material. In contrast, the separated positive electrode sheets 12 (step 236) that have been obtained from a plurality of electrode bodies 10 (specifically, a plurality of batteries) are connected in the length direction by welding or the like. For example, the positive electrode active material and the like that is attached to the end portion of each positive electrode sheet 12 in the longitudinal direction is removed and these ends are bound together by a welding or the like. The oxalic acid treatment (step 240), which will be explained below, is implemented using these connected positive electrode sheets (the positive electrode sheet connected body) as a treated material.

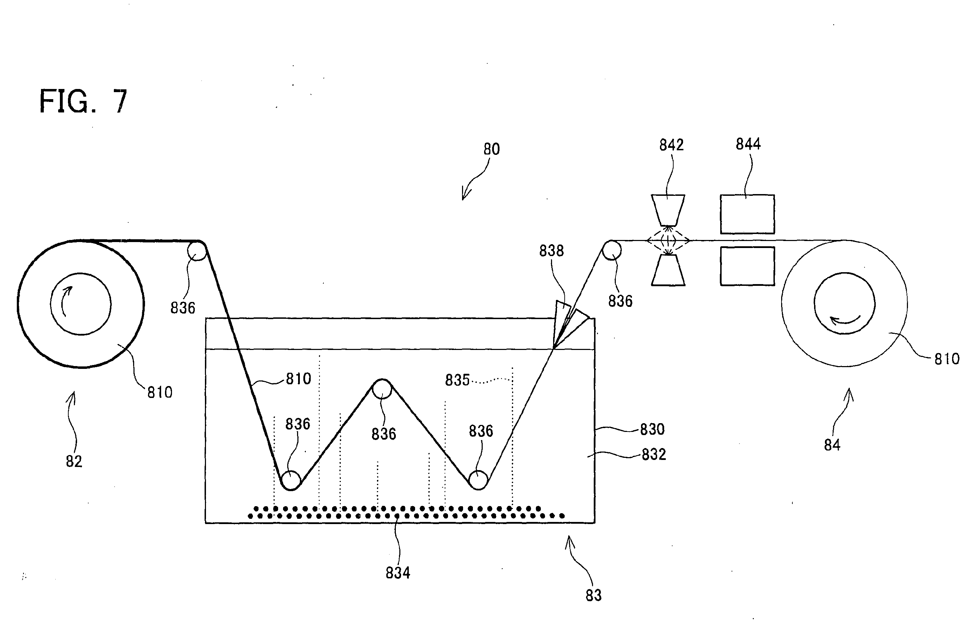

An example of the simplified structure of the apparatus used in the oxalic acid treatment is schematically shown in FIG 7. Broadly speaking, this oxalic acid treatment apparatus 80 is constructed such that after the treated material 810 that has been reeled out from a supply portion 82 has passed through the oxalic acid solution 832 of the oxalic acid contact portion 83 (specifically, after having been immersed in the oxalic acid solution), the treated material 810 is reeled in by the recovery portion 84.

The oxalic acid treatment step will now be explained in more detail. Specifically, the treated material 810 consisting of the positive electrode sheet connected body is wound onto the supply portion 82 to form a roll. On the surface of the positive electrode collector that forms this treated material 810, a positive electrode material layer (mainly the portion remaining after heating that consists of the positive electrode active material and the conducting material) is typically attached in a layered arrangement. The treated material 810 that has been reeled out from a supply portion 82 is guided to a plurality of guide rolls 836 and passes through the oxalic acid solution 832 that is stored in the treatment tank 830. At this time, due to the action of the oxalic acid, it is possible to make the positive electrode material layer fall off (self-detach) from the positive electrode collector that forms the treated material 810. Then due to the oxalic acid solution 832, it is possible to leach the lithium element included in the positive electrode collector that forms the treated material 810 and/or the positive electrode active material (here, LiNi_{0.8}Co_{0.2}O₂) that has fallen off from the positive electrode collector. Accompanying this reaction, oxygen gas 835 is generated. Note that the treatment tank 830 can be further provided with a temperature adjustment means (which can include a temperature detector, a heater, a cooling water duct and the like), an oxalic acid solution amount adjusting means (which can include an oxalic acid concentration detector, a water supply source, an oxalic acid supply source and the like), and an agitating means and the like (none of which are shown).

The apparatus 80 is constructed such that immediately after the treated material 810 has passed through the oxalic acid solution 832 and then has exited from the surface of the solution, it passes between the scraper plates 838. By providing these scraper plates 838, even when the positive electrode material layer and the like that has not completely fallen off from the positive electrode collector while passing through the oxalic acid solution 832 remains, and it is possible to remove them from the treated material 810 and return them to the oxalic acid solution 832 to be supplied to subsequent treatments. In addition, it is possible to decrease the amount of the oxalic acid solution 832 that is carried from the treatment tank 830 due to adhering to the treated material 810. After the treated material 810 has been washed on both sides by passing through a washing machine 842 capable of washing both sides and has been dried by a hot-air dryer 844, the treated material 810 is reeled into the recovery portion 84 as an aluminum material substantially consisting of the positive electrode collector (elongated aluminum foil). In this manner, the positive electrode collector can be recovered (step 242) and used for a variety of purposes as an aluminum material.

In the oxalic acid treatment step (step 240) described above, it is thought that a phenomenon such as that represented, for example, by the following reaction formula (1) occurs due to the positive electrode active material, which has been brought into the tank by the treated material 810, and the oxalic acid solution 832 being brought into contact in the treatment tank 830 of the oxalic acid contact portion 83:

2LiNiO₂ + 2H₂C₂O₄ → Li₂C₂O₄ + NiC₂O₄ + NiO + 1/2O₂+ 2H₂O (1)

According to the reaction formula (1), lithium nickel oxide (LiNiO₂) is reduced by oxalic acid (H₂C₂O₄), and soluble lithium oxalate (Li₂C₂O₄) (solubility in water at 17°C is about 8 g/100 g (H₂O)) is generated. This lithium oxalate is leached into the oxalic acid solution 832, and thereby the nickel element that forms the positive electrode active material is reduced from trivalent to divalent and oxygen gas (O₂) 835 is generated. It is thought that the positive electrode material layer (including the positive electrode active material) being self-detached from the positive electrode collector is related to the fact that the positive electrode material layer becomes difficult to maintain in a layered arrangement due to the action of this oxalic acid. In particular, it is conjectured that the oxygen gas that is generated in proximity to the interface between the positive electrode collector and the positive electrode material layer effectively functions to cause the positive electrode material layer to float away (self-detach) from the positive electrode collector.

Note that in the case in which unreacted positive electrode active material is included in the positive electrode material that has fallen from the treated material 810, the reaction with the oxalic acid solution will progress, for example, according to the reaction formula (1) in the treatment tank 830 even after falling off. Thereby, oxygen gas 835 and the like are generated.

In this manner, by treating the positive electrode active material included in the treated material 810 with the oxalic acid solution 832, the lithium element in this positive electrode active material forms a soluble oxalate (typically lithium oxalate) and is thereby leached into the oxalic acid solution. In contrast, the nickel element in the positive electrode active material is precipitated as an insoluble nickel compound (an oxalate, an oxide, or the like) in this oxalic acid treatment. For example, the solubility of nickel oxalate in water at 18°C is about 3×10⁻⁴ g/100 g (H₂O). In addition, similarly the cobalt element in the positive electrode active material is precipitated as an insoluble cobalt compound (an oxalate, an oxide or the like) in the oxalic acid treatment described above. For example, the solubility of cobalt oxalate in water at 25°C is about 3.5×10⁻³ g/100 g (H₂O). Such insoluble compounds accumulate in the treatment tank 830 (typically, at the bottom portion of the treatment tank 830). Furthermore, due to being substantially insoluble, the carbon material (the carbon black that serves as the conductive material) included in the positive electrode material also accumulates in the treatment tank 830.

The conditions for such an oxalic acid treatment can be appropriately adjusted depending, for example, on the treatment capacity required of the apparatus, the material of the positive electrode collector, the composition of the positive electrode active material and the like. For example, the oxalic acid concentration of the oxalic acid solution can be set in a range of from about 0.5 to 10 mass%, and normally is preferably set in a range of from about 1 to 8 mass% (for example, about 5 mass%). Note that, as is clear from the reaction formula (1), the oxalic acid in the oxalic acid solution 832 is consumed due to the reaction with the positive electrode active material. Thus, as necessary, oxalic acid may be added to the oxalic acid solution 832, and control may be carried out such that the oxalic acid concentration is maintained within a prescribed range. The temperature of the oxalic acid solution can be set in a range of from about 10 to 95°C, and normally is preferably set in a range of from about 25 to 80°C (for example, about 60°C). The time during which the treated material is immersed in the oxalic acid solution can be set in a range of from about 0.1 to 30 minutes, and normally is preferably set in a range of from 0.2 to 15 minutes, and more preferably set in a range of from 0.5 to 5 minutes (for example, about 2 minutes). As shown in FIG. 7, while each portion of the elongated treated material is immersed in sequence in the oxalic acid solution, it is possible to adjust the immersion time by the length of the path through which each portion of the treated material passes in the treatment liquid and/or the feed rate of the treated material. For example, by setting the feed rate of the treated material from about 20 to 40 mm/second, about 10 to 15 positive electrode sheets that form a lithium ion secondary battery having a discharge capacity of about 12 Ah can be efficiently treated per hour. Therefore, it is possible to realize a treatment efficiency of 200 positive electrode sheets or more per day. The concentration and temperature of the oxalic acid solution that is used can be determined such that the oxalic acid treatment can be carried out appropriately at this feed rate. In addition, the treatment capacity may be increased by disposing apparatuses and treatment tanks in parallel.

Note that although the oxalic acid solution can dissolve a positive electrode collector made of aluminum, the dissolution rate is not very high. Therefore, it is possible to prevent the positive electrode collector from being excessively dissolved by selecting appropriate treatment conditions. For example, in the oxalic acid treatment conditions for the present embodiment described above, the dissolution rate (the mass reduction rate) of the electrode collector can be suppressed to about 10 mass% or less. Therefore, for example, it is possible to recover the aluminum material included in the positive electrode collector before the oxalic acid treatment at about 90 mass% or more. In this manner, it is possible to recover the positive electrode collector from the treated material as a high quality aluminum material (an elongated aluminum foil) having a metal luster in a state in which substantially no positive electrode material (and positive electrode active material and the like) is attached.

In addition, in the present embodiment, positive electrode sheets obtained from a plurality of electrode bodies and have been connected together in the longitudinal direction in advance (the positive electrode connected body) are supplied to the oxalic acid treatment as the treated material, but the form of the oxalic acid treatment is not limited thereby. For example, a wound type electrode (including the positive electrode sheet and the negative electrode sheet) after the vacuum heating treatment may be set in the supply portion 82. As the positive electrode sheet is separated from the negative electrode sheet by unwinding this electrode body, this positive electrode sheet may be introduced into the oxalic acid solution and the oxalic acid treatment carried out.

In the oxalic acid treatment (step 240), the accumulated material 834 that is retained in the treatment tank 830 is drawn along with the oxalic acid solution 832 from the bottom of the treatment tank 830 at a suitable timing by using a submerged pump or the like, and it is possible to separate the liquid phase by means such as filtration or the like (step 244). The insoluble material (residue) that has been separated in this manner typically includes transition metal compounds having a low solubility such as nickel oxalate, cobalt oxalate, nickel oxide, cobalt oxide and the like, and carbon materials (carbon black). In contrast, the liquid phase (filtrate) that has been separated from the insoluble portion in step 244 typically has dissolved therein unreacted oxalic acid (residual oxalic acid), a lithium element (for example, lithium oxalate), and a small amount of an aluminum element (for example, aluminum oxalate).

The treatment of the solution (filtrate) obtained in step 244 will now be explained. First, calcium hydroxide is added to this solution (step 246). Thereby, the reactions proceed via the following reaction formulas (2) to (4):

Li₂C₂O₄ + Ca(OH)₂ → 2LiOH + CaC₂O₄ (2)

Al₂(C₂O₄)₃ + 3Ca(OH)₂ → 2Al(OH)₃ + 3CaC₂O₄ (3)

H₂C₂O₄ + Ca(OH)₂ → 2H₂O + CaC₂O₄ (4)

As a result of such reactions, the lithium oxalate (Li₂C₂O₄) is converted into lithium hydroxide (LiOH) and calcium oxalate (CaC₂O₄), the aluminum oxalate (Al₂(C₂O₄)₃) is converted to aluminum hydroxide (Al(OH)₃) and calcium oxalate, and the residual oxalic acid (H₂C₂O₄) is converted to calcium oxalate. Here, the solubility of the lithium hydroxide in water at 25°C is about 12.5 g/100 g (H₂O). In addition, the solubility of calcium oxalate in water at 13°C is about 6.7×10⁻⁴ g/100 g (H₂O). The solubility of aluminum hydroxide in water at 18°C is about 9.5×10⁻⁴ g/100 g (H₂O). Therefore, due to the reactions described above, the aluminum element and the oxalic acid element that are included in the solution (filtrate) obtained in step 244 can be precipitated as Al(OH)₃ and CaC₂O₄. By filtering the solution after the reactions (step 247), it is possible to readily separate the filtrate that includes the LiOH and the precipitate (residue) that includes the Al(OH)₃ and CaC₂O₄.

The step in which the lithium element (LiOH) that is included in the filtrate (solution) obtained in step 247 is recovered as a solid lithium compound will be explained. Specifically, carbon dioxide gas (CO₂) is supplied to the solution (step 252). At this time, the lithium solution obtained in step 247 may be used after being concentrated to a degree that does not cause the lithium hydroxide to precipitate. By supplying carbon dioxide gas, the lithium ions in the liquid react with the CO₂ to generate lithium carbonate (Li₂CO₃), as shown, for example, in the following reaction formula (5):

2LiOH + CO₂ → Li₂CO₃ +H₂O (5)

Because the solubility of the lithium carbonate in water is low in comparison to lithium hydroxide (about 1.31 g/100 g (H₂O) in water at 20°C), the lithium hydroxide is precipitated from the solution, generating sediment. By separating this sediment (precipitate) from the liquid phase by a method such as filtering (step 253) and then drying the same, it is possible to recover crystals of the lithium carbonate (step 257). In contrast, the Li₂CO₃ of this dissolved portion remains in the filtrate obtained in step 253. By mixing the filtrate that includes this Li₂CO₃ into the filtrate obtained in step 247 (step 254) and circulating the same, it is possible to increase the recovery rate of the lithium element (lithium carbonate).

Here, as a method for supplying the carbon dioxide gas to the lithium solution, it is possible to employ, for example, a method in which the CO₂ is bubbled into the solution. In order to react the lithium solution (lithium ions) and the CO₂ more efficiently, it is possible to employ suitable methods such as carrying out the reaction in a pressurized atmosphere (of, for example, normal pressure to about 1 MPa) that includes CO₂ or spraying the lithium solution into an atmosphere that contains CO₂. A high carbon dioxide gas concentration in the atmosphere is preferable. For example, preferably the reaction is carried out in an atmosphere having a CO₂ concentration of about 50 to 100 vol% (more preferably, about 80 to 100 vol%). Particularly preferably, the reaction is carried out in an atmosphere consisting substantially of CO₂ gas.

Note that the solubility of the lithium carbonate tends to increase when the concentration of the CO₂ that is dissolved in the reaction solution becomes high. Thus, for example, after reacting the lithium ions and CO₃ under a normal or a pressurized (for example, normal to about 1 MPa or less) atmosphere in which the CO₂ concentration is substantially 100%, preferably a treatment is carried out in which the amount of CO₂ that is dissolved in the reaction solution is decreased (the CO₃ is removed). When the CO₂ concentration in the solution is decreased by using this decarbonation treatment, the solubility of lithium carbonate decreases. As a result, because a portion of the lithium carbonate that was dissolved in the reaction solution before the decarbonation treatment precipitates (recrystalizes), the lithium carbonate can be readily separated and recovered from the liquid phase. This de-carbonating treatment may be implemented by using, for example, means in which the reaction solution is agitated in a normal or reduced pressure atmosphere, or in which air or an inert gas (nitrogen gas or the like) is bubbled through the reaction solution in this atmosphere. In addition, the solubility of the lithium carbonate tends to decrease somewhat along with an increase in the temperature (about 0.72 g/100 g (H₂O) at 100°C). Therefore, it is possible to lower the solubility of the lithium carbonate and increase the amount of precipitate by increasing the temperature of the reaction solution (for example, by heating the reaction solution to about 40 to 80°C). By such methods, it is possible to further increase the recovery rate of the lithium element (lithium carbonate).

In contrast, calcium oxalate and aluminum oxalate are included in the residue obtained by the filtering in step 247. An aqueous solution of caustic soda (NaOH) is added to this residue (step 312). Thereby, it is possible to generate sodium aluminate (NaAlO₂) from the aluminum hydroxide. Because this NaAlO₂ readily dissolves in water, it can be separated by means such as filtering from the substantially insoluble calcium oxalate (step 314) and be recovered (step 315).

In addition, when dilute sulfuric acid is added to the residue (mainly CaC₂O₄) obtained in the filtering in step 314 (step 318), the reaction proceeds via the following reaction formula (6):

CaC₂O₄ + H₂SO₄ → H₂C₂O₄ + CaSO₄ (6)

Here, the solubility of the oxalic acid in water at 19.5°C is about 8 g/100 g (H₂O), and the solubility of calcium sulfate in water at 20°C is about 0.208 g/100 g (H₂O). Therefore, by filtering this reaction solution (step 320), it is possible to separate and recover calcium sulfate (step 328). In addition, the oxalic acid included in the filtrate that has been obtained from step 320 can be reused as the oxalic acid solution 832 used in the oxalic acid treatment in step 240 (step 324). According to the present embodiment, it is possible to use the oxalic acid effectively by constructing such a circulating recycling system.

Next, the treatment of the insoluble portion (residue) that has been filtered by the filtering in step 244 described above will be explained. As described above, this residue contains insoluble transition metal compounds such as nickel oxalate, cobalt oxalate, nickel oxide, cobalt oxide and the like, and carbon material (carbon black). Sulfuric acid is added to this insoluble portion (step 262) and the transition metal compounds are dissolved. This is filtered (step 264), and the insoluble portion is separated from the liquid phase that includes the metal element (here, mainly nickel sulfate (NiSO₄), cobalt sulfate (CoSO₄)), and oxalic acid (H₂C₂O₄). Note that the solubilities of the nickel sulfate and the cobalt sulfate in water at 25°C are respectively about 40.8 g/100 g (H₂O) and about 37.4 g/100 g (H₂O). The main element of the insoluble portion (residue) separated in this step 264 is carbon material (carbon black) that was used as the conducting material in the positive electrode material and the like. This carbon material is recovered (step 282) and can be effectively used, for example, as a material to melt snow, a soil amendment, and the like.

In addition, the filtrate (solution) obtained in step 264 is an acidic solution that contains NiSO₄, CoSO₄, and H₂C₂O₄. This solution is neutralized by an aqueous solution of caustic soda (NaOH), which serves as a neutralizing agent (step 266). The neutralizing reactions at this time are represented, for example, by the following reaction formulas (7) to (9):

NiSO₄ + 2NaOH → Ni(OH)₂ + Na₂SO₄ (7)

CoSO₄ + 2NaOH → Co(OH)₂ + Na₂SO₄ (8)

H₂C₂O₄ + 2NaOH → Na₂C₂O₄ + 2H₂O (9)

Due to such a neutralizing reaction, the hydroxide materials (here, nickel hydroxide and cobalt hydroxide) of the transition metals from the solution precipitate. After the crystallization of these transition metal hydroxides has proceeded sufficiently, the reaction solution is filtered (step 268). Thereby, the Na₂SO₄ and the Na₂C₂O₄ that are included in the filtrate are recovered (step 274). In addition, the nickel hydroxide and the cobalt hydroxide are separated from the liquid phase and recovered (step 278). When recovered in this manner, high purity transition metal hydroxides can be obtained. Therefore, the reusability is high. For example, these are suitable as raw materials for manufacturing the lithium/transition metal composite oxide that serves as the positive electrode active material of a lithium ion secondary battery.

As explained above, according to the present embodiment, by carrying out an oxalic acid treatment wherein the treated material (the connected positive electrode sheets), in which the positive electrode material layer that includes the positive electrode active material is attached to the positive electrode collector, is immersed in an oxalic acid solution, a part of or substantially all of the positive electrode material can be caused to fall off (self-detach) naturally from the positive electrode collector without applying any particular mechanical stress or the like. Such a result is thought to be realized in connection with the oxygen gas that is generated by the reaction between the oxalic acid and the positive electrode active material. In addition, in the case in which a portion or all of the positive electrode material remains on the positive electrode collector after being immersed in the oxalic acid solution, due to the action of the oxalic acid (for example, the generation of the oxygen gas), the adhesive force of the positive electrode material to the positive electrode collector is weakened. Therefore, by using a means that provides, for example, the scraper plates 838 shown in FIG. 7, the remaining positive electrode material can be readily removed from the positive electrode collector. In this manner, it is possible to separate and recover at high efficiency the positive electrode collector (aluminum material) from the positive electrode sheet having a positive electrode active material on the positive electrode collector, where this separated and recovered positive electrode collector has substantially no positive electrode material (the positive electrode active material and the like) adhering to the surface.

In addition, according to the present embodiment, by using the difference between the solubility of the products of the reaction of a positive electrode active material and oxalic acid, the lithium element can be extracted from the positive electrode active material (the lithium/transition metal composite oxide), being separated from the transition metal element. Therefore, in comparison with a method in which, for example, the positive electrode active material is dissolved by a strong acid such as hydrochloric acid to obtain an acid solution in which the lithium element and the transition metal element are dissolved in a mixed state, and the lithium element and the transition metal element are then separated and recovered from this acid solution, according to the treatment method of the present embodiment, it is possible to recover the lithium element (for example, lithium carbonate) and/or the transition metal element (for example, a transition metal hydroxide such as nickel hydroxide, cobalt hydroxide and the like) that have a higher purity. These recovered materials are advantageously used, for example, to manufacture the positive electrode active material (the lithium/transition metal composite oxide) for a lithium ion secondary battery. In this manner, according to the present embodiment, it is possible to recover each type of material included in the lithium ion secondary battery in a form having a high usability. In addition, these recovered materials can be effectively reused.

The treatment method of the present embodiment can be implemented by using an apparatus having a relatively simple configuration (the oxalic acid treatment apparatus shown in FIG. 7, the vacuum heating treatment apparatus shown in FIG. 5 and the like). Therefore, it is possible to construct a treatment system that can be appropriately scaled depending on the number of lithium batteries to be treated. In this manner, these treatment apparatuses can be efficiently used (for example, at an appropriate operating rate).

### Second embodiment: treatment method for a lithium ion secondary battery

This embodiment is an example in which the lithium ion secondary battery that is treated differs from the lithium ion secondary battery in the first embodiment only in that the composition of the positive electrode active material is LiNi_{0.95}Co_{0.05}O₂, and otherwise, the structure is identical, and the treatment efficiency (recovery rate), the purity of the recovered materials and the like are evaluated mainly for the positive electrode sheet thereof.

One hundred lithium ion secondary batteries 1 having the structure shown in FIG. 3 were prepared (step 210 in FIG. 1). Each of the secondary batteries 1 has a discharge capacity of 12 Ah. The safety valves 28 of these secondary batteries 1 were each opened and then the secondary batteries 1 were subjected to a vacuum heating treatment in which they were heated at a reduced pressure of 50 kPa at 200°C for 2 hours, and then 500°C for 3 hours (step 220). The electrode bodies were extracted from the batteries free of organic matter obtained in this manner, and the positive electrode sheets were separated (steps 230 to 236). On the separated positive electrode sheets, the heated residue of the positive electrode material (mainly the positive electrode material and carbon black) is attached to the aluminum positive electrode collector in a layered form. Note that theoretical amount of positive electrode active material included in the positive electrode sheets of the 100 lithium ion secondary batteries described above is about 6.5 kg as converted content of LiNiO₂. In addition, the theoretical amount of positive electrode collector (aluminum foil) included in this positive electrode sheet is about 3.5 kg.

The positive electrode connected body is manufactured by binding these positive electrode sheets together in the longitudinal direction. The apparatus 80 having the configuration shown in FIG. 7 is used to carry out the oxalic acid treatment (step 240) using this positive electrode connected body as the treated material. An aqueous oxalic acid solution having an oxalic acid concentration of about 5 mass% is used as the oxalic acid solution 832. The temperature (the bath temperature, that is, the treatment temperature) of the oxalic acid solution 832 in the treatment tank 830 was set to about 60°C. The feed rate of the treated material 810 was set at about 30 mm/second. At this feed rate, the time during which each portion of the treated material 810 is immersed in the oxalic acid solution 832 (the immersion time) was about 2 minutes. When the treated material 810 that was reeled out from the supply portion 82 was introduced into the oxalic acid solution 832, oxygen gas 835 was generated substantially simultaneously. It is thought that this is oxygen gas that is generated by the reaction between the positive electrode active material that is included in the positive electrode material attached to the treated material 810 and the oxalic acid. Then the treated material is passed through the oxalic acid solution 832 to the recovery portion 84, and at the same time, the positive electrode material gradually falls away from the positive electrode collector and sinks to the bottom of the treatment tank 830. Oxygen gas is also generated continuously from this fallen material.

The mass of the positive electrode collector (aluminum foil) recovered in this recovery portion 84 was about 3.3 kg, and the recovery rate was about 94 mass%. Therefore, it is thought that aluminum corresponding to about 6 mass% is dissolved in the oxalic acid solution 832 as aluminum oxalate. The recovered positive electrode collector has a metallic luster and no positive electrode material can be seen adhering to the surface thereof.

Then, the treatment following the flowchart shown in FIG. 1 is carried out, and 2.25 kg of lithium carbonate crystals are recovered from the filtrate obtained in step 244 (steps 246 to 257). This corresponds to a high recovery rate of about 91.6 mass% as converted content of elemental lithium. It is thought that the lithium element that is not recovered remains as a soluble portion in the filtrate obtained in step 253. In contrast, the insoluble portion (residue) obtained in step 244 is treated, and 5.75 kg of nickel hydroxide and 0.30 kg of cobalt hydroxide are thereby recovered (steps 262 to 278). This corresponds to a high recovery rate of about 98 mass% or more, respectively, as converted content of elemental nickel and converted content of elemental cobalt. Note that the recovered material in step 278 includes, in addition to the transition metal hydroxides described above, about 0.021 mass% of Cu, 0.018 mass% of Al, and about 0.005 mass% of Na, which are amounts at levels that do not present problems in practical use.

### Third embodiment: treatment method for a lithium ion secondary battery

This embodiment is an example in which, when the lithium ion secondary battery that is treated differs from the lithium ion secondary battery in the first embodiment only in that the composition of the positive electrode active material is LiNi_{0.85}Co_{0.15}O₂, and otherwise, the structure is identical, a copper element removal step is carried out on the insoluble portion (residue) obtained in step 244, and this enables recovery of a transition metal element having a higher purity.

First, after the battery voltage (the difference between the positive electrode potential and the negative electrode potential) is discharged to substantially 0 V by a discharger, the completely discharged lithium ion secondary batteries are then prepared by being left for one week or more in a state in which the gap between the positive electrode terminal and the negative electrode terminal is shorted by a lead (shorting wire). A copper element is present on the positive electrode (typically on the surface of the positive electrode material layer) of this completely discharged secondary battery. This copper element is mainly a portion of the copper element that forms the negative electrode collector and that has migrated onto the positive electrode mainly during the complete discharge process described above. The mechanism that produces this copper element migration phenomenon will be explained. Specifically, the solution potential of the Cu is about 3.2V (here and below, the Li electrode is basis). In addition, a normal lithium ion secondary battery is used such that the battery voltage (operating voltage) is recharged after falling to about 3.0 V. In such use conditions, the negative potential is maintained in a range of from about 0.1 to 0.5 V. Therefore, in the normal use conditions of a lithium ion secondary battery, Cu ions are not leached from the negative electrode collector. In contrast, when the battery voltage falls too far below 3.0 V, the negative electrode potential rises rapidly. Thereby, when the negative electrode potential rises to about 3.2 V (typically, when the battery voltage falls below about 0.5 V), the copper in the copper foil that forms the negative electrode collector ionizes and begins to be leached. In the state in which the battery has been completely discharged in this manner (the state in which the battery voltage has been substantially discharged to 0 V), the negative electrode potential has already risen above 3.2 V. Thus, in the completely discharged secondary battery that is the object of treatment in the present embodiment, a portion of the Cu element that has been leached from the negative electrode collector passes through the negative electrode material layer (graphite layer) and the separator, and arrives at the positive electrode (the surface of the positive electrode material layer) to be precipitated there as metallic copper.

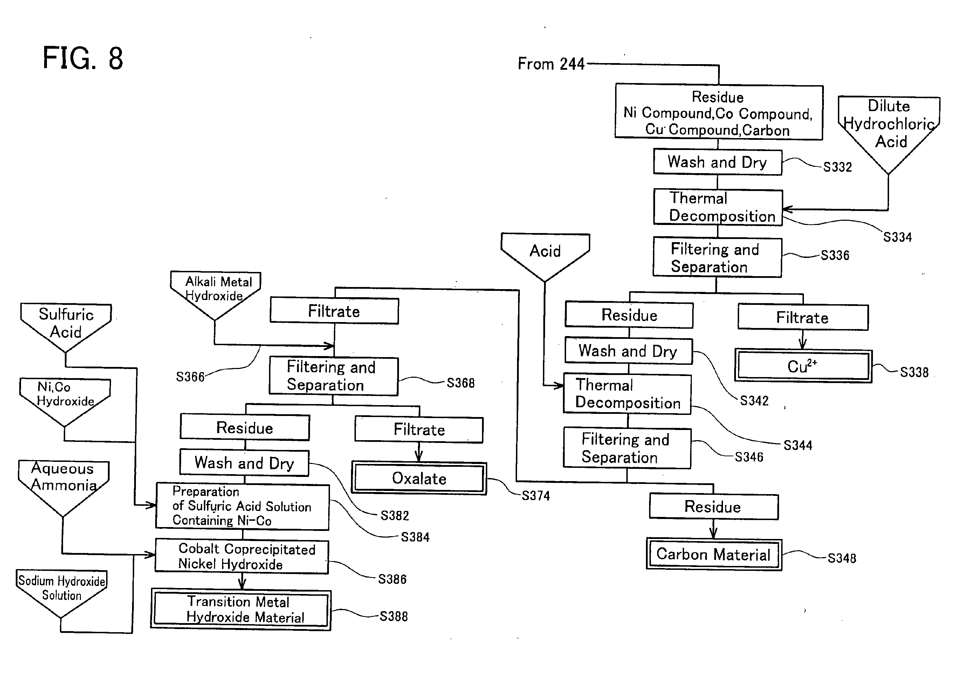

Below, a treatment method for such a completely discharged secondary battery will be explained with reference to FIG. 1 and FIG. 8. Note that in order to simplify the explanation, the disclosures of repeated portions that are implemented identically in the first and second embodiments are omitted.

A vacuum heating treatment (step 220) and an oxalic acid treatment (step 240) that are identical to those in the second embodiment are carried out on the completely discharged secondary batteries 1 described above, and the filtrate and the residue (insoluble portion of the treated material) due to the filtering in step 244 are separated. The results of ICP (inductively coupled plasma) optical emission spectrometry of the filtrate and the residue obtained thereby are shown in TABLE 1. Note that the numerical values in the table represent, for the filtrate, the proportion (ppm) included in the total filtrate, and for the insoluble portion, the proportion (mass%) included in the total insoluble portion.

Note that according to the results of the XRF (fluorescent X-ray) analysis, the insoluble portion described above includes a large amount (the amount > 10 mass% of total insoluble portion) of Ni and C, includes a small amount (the amount is 1 to 10 mass% of total insoluble portion) of Co, and includes trace amounts (the amount < 1 mass% of total insoluble portion) of Cu, Al, and P. In addition, NiC₂O₄, NiO, Ni, and C were detected by the XRD (X-ray diffraction) analysis of the insoluble portion described above. This result shows that the above-described elements in this insoluble portion are each included at several mass% or more. Among these, the main element was NiC₂O₄. In addition, it was confirmed that the Cu element was present only on the surface of the Ni, Co, C, and the like, and that the Cu element did not penetrate inside to form compounds.

**TABLE 1**

| Element | Filtrate (ppm) | Insoluble Portion (mass%) |
|---|---|---|
| Ni | < 1 | 32.6 |
| Co | < 1 | 6.07 |
| Cu | < 1 | 0.72 |
| Al | 30750 | 0.57 |
| P | 185 | 0.07 |
| Fe | < 1 | <0.01 |
| Li | 11100 | <0.01 |
| Cr | < 1 | <0.01 |
| Ca | Not detected | Not detected |
| C | Not detected | 17.1 |

According to the results of the ICP optical emission spectrometry shown in TABLE 1, in addition to the transition metal elements (Ni, Co) that form the positive electrode active material, Cu, Al, P, and C elements are included in the insoluble portion obtained in step 244. Among these, the Al element and the P element are mixed due to the adhering of the filtrate, and the insoluble portion can be easily removed by washing the insoluble portion with water, an aqueous oxalic acid solution or the like. Therefore, it is thought that if more of the C element (mainly originating in the carbon black that serves as a conductive material) and the Cu element (mainly originating in the copper foil that serves as the negative electrode collector) can be removed from the insoluble portion after washing, then it will be possible to recover a higher purity Ni element and Co element.

Thus, the insoluble portion (residue) due to the filtering in step 244 is washed and dried (step 332), and favorable conditions for precipitating the Cu element at high efficiency without, as far as possible, precipitating the Ni element and the Co element from this washed and dried insoluble portion (below, referred to as the "insoluble portion after washing", or simply the "insoluble portion").

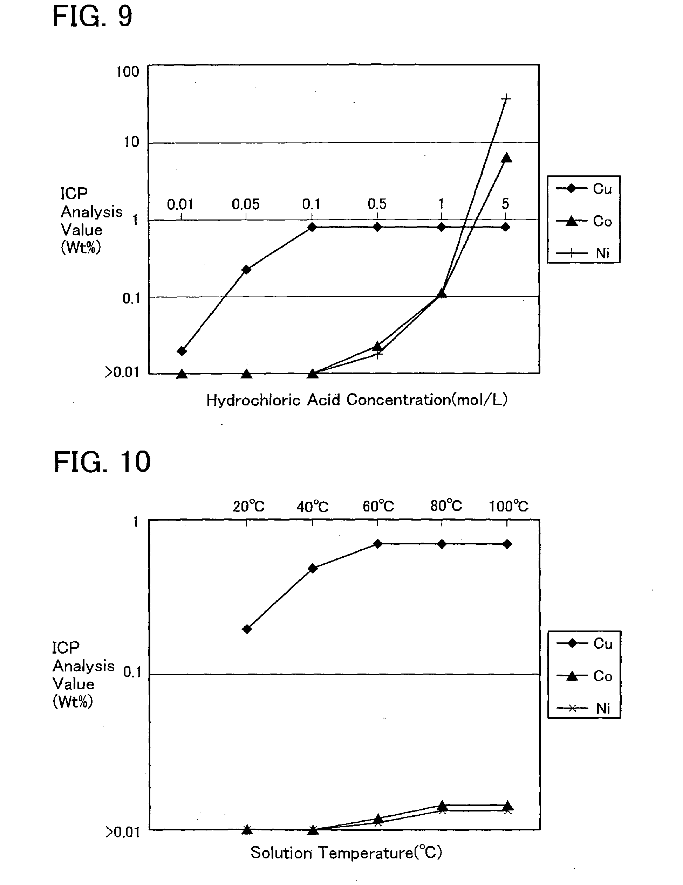

FIG. 9 is a graph showing the relationship between the hydrochloric acid concentration and the dissolved amounts of oxalates of the transition metal elements (Cu, Ni, Co) in the case in which the insoluble portion after washing described above is immersed for about 15 to 30 minutes in hydrochloric acid that has a temperature of 80°C. The measurement of the dissolved amount was carried out by IPC optical emission spectrometry. In FIG. 9, in order to establish a standard, these measurement results are represented after being converted so that the total amount of the hydrochloric acid is maintained constant.

As can be understood from FIG. 9, substantially all of the included Cu element (0.72 mass%) is precipitated into the solution under the conditions in which the hydrochloric acid concentration is equal to or greater than 0.1 mol/L (liter). At a hydrochloric acid concentration of 0.1 mol/L, the Ni element and the Co element substantially do not precipitate, and even at a hydrochloric acid concentration of 0.5 mol/L, the precipitated amount of the Ni element is 0.020 mass% and the precipitated amount of the Co element is 0.0024 mass%, allowing only a small increase in the dissolved amount. In contrast, when the hydrochloric acid concentration exceeds 1 mol/L, the dissolved amounts of the Ni element and the Co element rapidly increase. From these results, if the hydrochloric acid concentration is in a range of from about 0.1 to 0.5 mol/L, then the dissolved amounts of the Ni element and the Co element are suppressed to a practical level, (that is, the recovery rate of these elements is not remarkably reduced), and it is possible to dissolve substantially all of the Cu element included in the insoluble portion. When taking into consideration variation in workability, preferably the treatment conditions are controlled such that the hydrochloric acid concentration is in a range of from 0.2 to 0.4 mol/L (for example, 0.3 ± 0.1 mol/L).

FIG. 10 is a graph showing the relationship between the dissolution temperature (the temperature of diluted hydrochloric acid) and the dissolved amount (mass%) of oxalates of the transition metal elements (Cu, Ni, Co) in the case in which the insoluble portion after washing described above is immersed for 15 to 30 minutes in diluted hydrochloric acid having a concentration of 0.3 mol/L. As can be understood from this figure, when the temperature of the hydrochloric acid solution is in a range of from 60°C or more (here, 60 to 100°C), it is possible to dissolve all of the Cu element stably under these treatment conditions (treatment time, concentration and the like). In contrast, when the treatment temperature (the temperature of the hydrochloric acid that is used) falls below 40°C and 20°C, a tendency for the dissolved amount of the Cu element to decrease can be observed. In addition, in a range of from 20 to 100°C, the leached amounts of the Ni element and the Co element were both at permissible levels. From these results, it can be said that in the treatment conditions described above, carrying out the treatment under the conditions in which the hydrochloric acid solution temperature is 60 to 100°C is appropriate. When taking into consideration variation in workability, preferably the treatment conditions are controlled such that the temperature of the hydrochloric acid solution is in a range of from 70 to 90°C (for example, 80 ± 10°C).

Based on the research results described above, in the present embodiment, a copper element precipitation step (step 334) is carried out in which the Cu element included in this insoluble portion is heated and dissolved (leached) by immersing the insoluble portion after washing for about 20 minutes in diluted hydrochloric acid having a concentration of about 0.3 mol/L at about 80°C. Subsequently, the diluted hydrochloric acid solution that includes the copper element (Cu ions) is separated from the insoluble element by a means such as filtration or the like (step 336). In this manner, the copper element (Cu ions) is recovered (step 338).

Note that similar research into the relationship between the concentration of the acids that are used and treatment temperatures, and the dissolved amounts (mass%) of the transition metal elements (Cu, Ni, Co) included in the insoluble portion described above was carried out by using sulfuric acid and nitric acid instead of diluted hydrochloric acid. However, no treatment conditions could be discovered in which the Cu element was efficiently dissolved while dissolved amounts of the Ni element and the Co element were suppressed within a practical range. Therefore, it is thought that the effect of the present embodiment, in which the Cu element is efficiently removed from the insoluble portion described above while the majority of the Ni element and the Co element remains in the insoluble portion, can be advantageously realized by a combination of an oxalic acid treatment (oxalic acid treatment step) in which the oxalic acid acts on the positive electrode active material and a diluted hydrochloric acid treatment (copper element removal step) in which the copper element is leached by the diluted hydrochloric acid from the insoluble portion after the oxalic acid treatment and then removed.

The Cu ions (filtrate) that adhere to the surface of the insoluble portion (residue) separated by filtering in step 336 are removed by washing and drying (step 342). Acid is added to the insoluble portion after washing, heated as necessary, and the transition metal elements (here, Ni and Co) are dissolved (step 344). An acid that can dissolve the transition metal element included in the insoluble portion at a practical rate may be selected as the acid for use in this step 344. For example, hydrochloric acid or concentrated sulfuric acid having a concentration that is higher than that used in step 344 (for example, a concentration of about 1 to 6 mol/L, preferably 3 to 5 mol/L) can be used. The temperature of the acid can be set, for example, about 20 to 80°C (preferably 30 to 50°C). In terms of treatment efficiency and the like, preferably this step is implemented under conditions that enable substantially complete dissolving of the transition metal elements (Ni, Co) that are included in the insoluble portion in a treatment time of about, for example, 10 to 60 minutes (preferably 15 to 30 minutes). In the present embodiment, hydrochloric acid having a concentration of about 5 mol/L is added to the insoluble portion after the washing and drying in step 342, and substantially all of the Ni element and the Co element is dissolved by heating for 20 minutes at 50°C.

The insoluble portion (residue) obtained by filtering and separating the result (step 346) is made of carbon material (carbon black) that was used mainly as the conducting material in the positive electrode material. In this manner, the carbon material can be recovered (step 348).

In addition, the filtrate separated in step 346 is an acidic solution that includes transition metal ions (here, Ni ions and Co ions) that originate in the positive electrode active material. An alkali transition metal hydroxide is added to this filtrate as a neutralizing agent to neutralize the same (step 366). Thereby, crystals of the hydroxide of the transition metals (here, nickel hydroxide and cobalt hydroxide) are precipitated and sedimented from the filtrate described above. One or more species selected from NaOH, KOH, LiOH or the like may be used as an alkali transition metal hydroxide used in the neutralization, and preferably KOH is used. In the present embodiment, KOH is used as the neutralizing agent. Subsequently, the precipitated transition metal hydroxides (residues) and the solution (filtrate) that includes the alkali metal oxalates can be separated by means of filtration or the like (step 368). Thereby, it is possible to recover the oxalates (K₂C₂O₄, KCl and the like) that are included in this filtrate (step 374).

The filtrate adhering to the surface is removed by washing and drying (step 382) from the residue obtained by the filtering in step 367, and it is possible to recover high purity transition metal hydroxides. In the present embodiment, a useful material is manufactured (recovered) after the transition metal hydroxides recovered here have been further treated. Below, an example will be explained in which a transition metal hydroxide material is manufactured. This transition metal hydroxide material is used as a raw material for manufacturing a positive electrode active material (LiNi_{0.85}Co_{0.15}O₂) whose composition is substantially the same as the positive electrode active material for a lithium ion secondary battery that is the object of treatment in the present embodiment.

Specifically, the compositions of the transition metal hydroxides (here, mainly nickel hydroxide and cobalt hydroxide) that have been recovered through the steps described above are analyzed, and the proportions of the Ni and Co are determined. As shown in the results of the analysis in TABLE 1, transition metal hydroxides, which were recovered through the steps described above, could be obtained in which the nickel hydroxide and the cobalt hydroxide are included at substantially the same ratio (the mole ratio of the converted consist of elemental transition metals, specifically, Ni : Co = 85 : 15) as the proportions of the Ni and Co in the positive electrode active material (LiNi_{0.85}Co_{0.15}O₂) of lithium ion secondary batteries that are the object of the treatment. In addition, in the case in which the ratio of Ni to Co deviates above the prescribed ratio described above (Ni : Co = 85 : 15), the ratio of Ni to Co is adjusted by adding an equivalent necessary amount of the hydroxide of the insufficient transition metal. Because only the insufficient portion is added in this manner, it is possible to reduce the amount of the transition metal element (for example, Co) that is newly used. Note that in the case in which it is possible to predict (determine) the ratio of the Ni element and the Co element from prior treatment experiments and preparatory testing and the like, the analytic operations described above can be omitted.

Next, these transition metal hydroxides are dissolved in sulfuric acid, and a sulfuric acid solution that includes Ni ions and Co ions in a prescribed ratio is prepared. At this time, the concentration may be prepared such that the total concentration of the transition metal elements included in the sulfuric acid solution described above is set, for example, to about 0.5 to 2.5 mol/L. In the present embodiment, a sulfuric acid solution (a sulfuric acid solution that contains Ni-Co) is prepared in which Ni ions and Co ions are incorporated at a ratio (mole ratio of the reduced elemental transition metals) of Ni : Co = 85 : 15 and the total concentration of these ions is about 1.5 mol/L (step 384).

A neutralizing agent is added to this sulfuric acid solution containing Ni-Co. In the present embodiment, aqueous ammonia (NH₄OH) and an aqueous sodium hydroxide solution (NaOH) are used as the neutralizing agents. An aqueous ammonia having a concentration of 10 to 25 mass% can be preferably used. In the present embodiment, an aqueous ammonia having a concentration of 20 mass% was used. An aqueous sodium hydroxide solution having a concentration of, for example, 10 to 30 mass% can be preferably used. In the present embodiment, an aqueous sodium hydroxide solution having a concentration of 20 mass% was used.

In addition, while adding these neutralizing agents (the aqueous ammonia and the aqueous NaOH solution) continuously and simultaneously, the reaction temperature, pH, and the Ni ion concentration and the ammonium ion concentration in the solution are respectively controlled so as to remain in a constant range, and the coprecipitated product of the nickel hydroxide and the cobalt hydroxide (below, referred to as the cobalt coprecipitated nickel hydroxide) is synthesized. Specifically, the sulfuric acid solution containing Ni and Co described above, the aqueous ammonia described above, and the aqueous sodium hydroxide solution described above are simultaneously supplied from separate supply openings to a 10 L sealed synthesis tank provided with an agitator, and these solutions are reacted while being agitated in the synthesis tank (step 386). At this time, the reaction temperature is controlled so as to be maintained within a range of 50 ± 2°C, the pH within a range of 12±0.3, the Ni ion concentration within a range of 30 ± 20 mg/L, and the ammonium ion concentration within a range of 7.5 ± 2 g/L. Note that the initial setting values of the supply rate for each solution is as follows: sulfuric acid solution containing Ni-Co, 2.3 ml/minute; aqueous ammonia, 0.16 ml/minute; and aqueous sodium hydroxide solution, 1.5 ml/minute. In addition, the supply rate of each of the solution is adjusted while taking care not to spatter ammonia such that the reaction temperature, pH, and ion concentrations are maintained within the ranges described above. This type of operation continues for about 36 hours, and cobalt coprecipitated nickel hydroxide is obtained as the transition metal hydroxide material (step 388). The obtained cobalt coprecipitated nickel hydroxide (the transition metal hydroxide material) presented a substantially spherical shape when observed by using SEM (scanning electron microscopy). In addition, the tapping density was about 2.1 g/ml, and the full width at half maximum of the diffraction peak for the (101) plane of XRD (X-ray diffraction) was about 0.5 deg. The positive electrode active material that is manufactured by using the transition metal hydroxide material having such properties can form a lithium ion secondary battery having a superior battery performance (for example, discharge capacity).

### Reference Example 1: manufacturing method for a positive electrode active material

The transition metal hydroxide material obtained by the third embodiment described above is advantageously used as a raw material for positive electrode active material manufacture because, for example, nickel and cobalt are mixed (coalesced) in a suitable state. For example, by mixing this transition metal hydroxide material and a lithium hydroxide material (LiOH·H₂O) and the like in a prescribed proportion and baking under suitable conditions, it is possible to obtain a positive electrode active material (for example, the positive electrode active material represented by LiNi_{0.85}Co_{0.15}O₂) that is a lithium/nickel composite oxide and is substantially formed from a composite oxide that includes cobalt. Here, the lithium hydroxide material used along with the transition metal hydroxide material can be preferably manufactured by using the lithium carbonate (Li₂CO₃) recovered in step 257 shown in FIG. 1. For example, this lithium carbonate can be decomposed into Li₂O and CO₂ by heating. Normally a heating temperature at this time of about 1500°C or more is appropriate. LiOH·H₂O can be obtained by supplying steam (H₂O) to this Li₂O. In the recovery step of the lithium carbonate (Li₂CO₃) recovered by the embodiment described above, only treatment agents that include lithium as an alkali metal element are used. Therefore, the lithium hydroxide (monohydrate) manufactured from such a lithium carbonate has a high level of purity, and in particular, the incorporated amounts of other types of alkali metal elements such as sodium are small. Thus, this can be used as-is in the manufacture of positive electrode active material and the like without carrying out a separate purification step (for example, a step in which the lithium ions are separated from the sodium ions by using a membrane separation apparatus).

### Reference Example 2: manufacturing method for a lithium ion secondary battery

An example in which a lithium ion secondary battery is manufactured by using (reusing) the positive electrode active material obtained in reference example 1 will be briefly explained. For example, to manufacture the lithium ion secondary battery 1 having the structure shown in FIG. 3, a positive electrode material paste is prepared by dispersing this positive electrode active material in an appropriate solvent along with carbon black (CB) and polytetrafluoroethylene (PTFE) powder. Water, N-methyl pyrolidone or the like can be used as a solvent. This paste is applied to the positive electrode collector (aluminum foil or the like), and then the solvent is volatilized. In this manner, a positive electrode sheet in which the positive electrode material layer is provided on both sides of the positive electrode collector is manufactured. The application of the positive electrode material paste can be carried out by using a comma coater, a die coater or the like. In contrast, the negative electrode material paste is prepared by dispersing carbon black (CB) and polytetrafluoroethylene (PTFE) in an appropriate solvent. This is applied to a negative electrode collector (copper foil or the like), and then the solvent is volatilized. Thereby, a negative electrode sheet in which the negative electrode material layer is provided on both sides of the negative electrode collector is manufactured. These electrode sheets are laminated with a separator sheet (a porous polypropylene sheet or the like) interposed therebetween. The electrode body is manufactured by winding this laminated body. The positive electrode terminal and the negative electrode terminal are connected by soldering or the like at the ends of the electrode body in the axial direction. This is accommodated along with the electrolyte solution in the battery container made of aluminum or the like. It is possible to use an electrolyte in which about 1 mol/L of LiPF₆ is dissolved in a 7 : 3 (mass ratio) solution mixture of dimethyl carbonate (DMC) and ethylmethyl carbonate (EMC). It is possible to use that which is recovered in step 222 (refer to FIG. 2) in the first embodiment described above as the DMC-EMC solution mixture. In this manner, it is possible to construct (reproduce) a lithium ion secondary battery.

Above, specific examples of the present invention have been explained in detail. However, these are simply illustrations and do not limit the scope of the claims. Various alterations and modifications of the specific examples described above are included in the technology recited in the claims.

In addition, the technical elements explained in the present description and the drawings exhibit a technical utility individually or in various combinations, and technical elements are not limited to combinations recited in the claims of the present application. In addition, the technology illustrated in the present description and the figures simultaneously attains a plurality of objects, and the technology provides a technological utility in attaining one of these objects itself.

## Claims

1. A method for treating a lithium battery comprising a positive electrode active material substantially formed by a composite oxide that includes lithium and one or more species of transition metal elements, the method comprising:
an oxalic acid treatment step in which a lithium element is leached from the positive electrode active material by supplying an oxalic acid solution to a treated material that includes the positive electrode active material that originates in the lithium battery; and
a separation step in which a lithium solution that includes the lithium element that has been leached is separated from the insoluble portion of the treated material.

2. The method according to claim 1, wherein the treated material comprises a positive electrode that has the positive electrode active material on a positive electrode collector.

3. The method according to claim 1, wherein the lithium battery is provided with a wound type electrode that includes a sheeted positive electrode having the positive electrode active material on a positive electrode collector, and a sheeted negative electrode, and the positive electrode that has been separated from the negative electrode that forms the electrode is supplied to the oxalic acid treatment step.

4. The method according to claim 2 or 3, wherein the oxalic acid treatment step includes a treatment in which the positive electrode is immersed in the oxalic acid solution.

5. The method according to any one of claims 1 to 4, wherein the temperature of the oxalic acid solution is 25 to 80°C.

6. The method according to any one of claims 1 to 5; further comprising a step of recovering an oxalic acid by separating the lithium element from the lithium solution obtained in the separation step, wherein the recovered oxalic acid is reused in the oxalic acid treatment step.

7. The method according to claim 6, wherein:
the oxalic acid recovery step comprises:
a treatment in which calcium oxalate is precipitated by supplying calcium hydrate to the lithium solution obtained in the separation step;
a treatment in which the precipitated calcium oxalate is separated from the solution;
a treatment in which calcium sulfate is generated by supplying sulfuric acid to the separated calcium oxalate; and
a treatment in which the oxalic acid is recovered by separating the generated calcium sulfate and the liquid phase that includes the oxalic acid.

8. The method according to claim 7, further comprising:
a treatment in which lithium carbonate is precipitated by supplying carbon dioxide gas to the solution obtained by the treatment in which the precipitated calcium oxalate is separated; and
a treatment in which the precipitated lithium carbonate is separated from the solution.

9. The method according to any one of claims 1 to 8, wherein electrolyte and organic matter are removed by heating the lithium battery, and a portion of or all of the constituent members of the battery remaining after being heated are supplied to the oxalic acid treatment step.

10. The method according to 1, further comprising:
a leaching step in which at least one of the species of transition metal elements among the one or more species of transition metal elements included in the insoluble portion of the treated material is leached by a strong acid; and
a step in which hydroxide of the transition metal element being leached to the acid is precipitated by adding a neutralizer to this solution.

11. The method according to claim 1, further comprising a copper element removal step in which the copper element is leached by an acid and removed from the insoluble portion in a case in which the insoluble portion of the treated material includes the copper element.

12. The method according to claim 11, wherein the composite oxide includes lithium and nickel and/or cobalt, and the copper element removal step includes a treatment in which the copper element is leached from the insoluble portion of the treated material by hydrochloric acid solution at a temperature of 60°C or more and a concentration of 0.1 to 0.5 mol/liter.
